# EUROPÄISCHE PATENTSCHRIFT

(11) **EP 1 649 205 B1**
(45) Veröffentlichungstag und Bekanntmachung des Hinweises auf die Patenterteilung: **25.04.2007**
(21) Anmeldenummer: 04763475.3
(22) Anmeldetag: 24.07.2004
(51) Int. Cl.: F16L 58/04

(54) **ISOLIERTE ROHRLEITUNGEN AUS STAHL**
INSULATED PIPE MADE OF STEEL
CONDUITES EN ACIER ISOLEES

(30) Priorität: 27.07.2003 DE 10334252; 05.03.2004 DE 102004011386; 19.05.2004 DE 102004025277; 03.07.2004 DE 102004032432
(43) Veröffentlichungstag der Anmeldung: 26.04.2006
(73) Patentinhaber: Stucke, Walter, 40878 Ratingen (DE)
(72) Erfinder: Stucke, Walter, 40878 Ratingen (DE)
(74) Vertreter: Kaewert, Klaus
(86) Internationale Anmeldenummer: PCT/EP2004/008313
(87) Internationale Veröffentlichungsnummer: WO 2005/010894

(56) Entgegenhaltungen:
- WO-A-94/22598
- PATENT ABSTRACTS OF JAPAN Bd. 0152, Nr. 35 (M-1125), 17. Juni 1991 (1991-06-17) -& JP 03 073340 A (NIPPON STEEL CORP), 28. März 1991 (1991-03-28)

## Beschreibung

Die Erfindung betrifft isolierte Rohrleitungen aus Stahl, insbesondere das Nachisolieren von Stahlrohrverbindung und geschweißten Abgängen, noch weiter bevorzugt kunststoffisolierten Erdgasleitungen aus Stahl. Derartige Leitungen finden aber auch für andere Medien Anwendung. Dabei kann es sich um flüssige oder gasförmige Brennstoffe, oder chemische Rohstoffe, z.B. Sauerstoff oder Wasserstoff, handeln.

Die meisten Rohrleitungen aus Stahl sind korrosionsgefährdet.
Die Erdgasleitungen sind im Erdreich wie auch oberhalb des Erdreiches feuchtigkeitsbelastet. Deshalb rosten Erdgasleitungen aus Stahl. Zusätzlich kann es zu einer Elektrokorrosion kommen.

Die Erdgasleitungen sind zum allergrößten Teil im Erdreich verlegt. Dort kommt es auch zu elektrischen Spannungen und zu Stromfluß bzw. zu Streuströmen. Besonders große Belastungen aus Streuströmen ergeben sich an elektrifizierten Eisenbahnstrecken bzw. an Straßenbahnstrecken. Bei Eisenbahnen und Straßenbahnen kann der Antriebsmotor üblicherweise zugleich zur Bremsung eingesetzt werden. Die Elektromotoren werden dadurch zu Generatoren. In der Regel wird der entstehende Bremsstrom in das Erdreich geleitet. Bei den Hochgeschwindigkeitszügen ist der Bremsstrom noch in einer Entfernung von vielen Kilometern meßbar.
Zusammen mit der Feuchtigkeit im Erdreich und der Beschaffenheit des Erdreiches beinhalten die Streuströme eine große Korrosionsgefahr. Durch Korrosion kann es ohne weiteres örtlich zu einem Stahlabtrag am Stahlrohr von 9 oder 10% pro Jahr an der Rohrwandung kommen. Die Leckagen sind dann absehbar. Bei Leckagen wird weniger der Verlust an Erdgas als die Explosionsgefahr z..B. an Erdgasleitungen als nicht tolerierbar angesehen.
Zur Vermeidung von Korrosion ist es deshalb üblich, Stahlrohre mit einer Isolierung zu versehen. Die Isolierungen sind jedoch aus unterschiedlichen Gründen häufig mangelhaft.

Stand der Technik für die Isolierung sind eine Vorbehandlung der zu isolierenden Rohrflächen und ein mehrschichtiger Isolierungsaufbau. Es wird ein zweischichtiger und ein dreischichtiger Isolierungsaufbau angeboten. Die bekannten Isolierungen haben sich insbesondere als 3-Schichten-Schutz mit einer Epoxidharz(EP)-Schicht, einer Kleberschicht und einer schwarzen Polyethylen(PE)-Schicht bewährt. Die Technik für das Aufbringen von Kleberschicht und PE-Schicht ist in der Veröffentlichung "Prüfung von beschichteten Rohren" Mitteilung der Mannesmannröhren-Werke AG, 1973, VDI-Verlag Düsseldorf, beschrieben. Desgleichen ist dort ein Pulveraufschmelzverfahren beschrieben, das zum Auftragen von EP-Schichten verwendet wird.
Das PE kommt in verschiedenen Beschaffenheiten vor, als HDPE, als MDPE und als LDPE. Anstelle des PE-Schicht kommen auch Polypropylen-(PP)Schichten für die Isolierung in Betracht. Diese Schichten bilden den Außenmantel der Isolierung Desgleichen kommen auch andere Kunststoffe als PE oder PP für den Kunststoffmantel in Betracht.
Im weiteren schließt die Bezeichnung PE sowohl die unterschiedlichen Beschaffenheiten als auch andere Kunststoffe ein, wenn nicht ausdrücklich anderes angesprochen ist.

Probleme entstehen dann, wenn mangelhaftes Material für die Isolierung verwendet wird und/oder die Isolierung der Rohre durch mangelhaften Transport, mangelhafte Lagerung und mangelhafte Rohrverlegung verletzt wird.
Dramatische Fehler entstehen beim Isolieren, wenn minderwertiges farbiges PE eingesetzt wird. Minderwertig ist das farbige PE ohne ausreichende Stabilisierung. Bei üblicher Lagerung sind die isolierten Rohren einer Belastung durch UV-Strahlung ausgesetzt. Dadurch zersetzt sich die PE-Schicht.
Dramatische Fehler entstehen auch bei mangelhafter Vorbereitung der Rohrenden für eine Verbindung der Rohrenden mit den Rohrenden anderer Rohre.
Die Verletzung kann aus mehreren Gründen entstehen. Dann
Nach der Verletzung der Isolierung kann die Feuchtigkeit unter die Rohrisolierung wandern und beste Voraussetzungen für eine Korrosion finden.
Dramatische Fehler können auch bei mangelhafter Rohrverlegung entstehen.
Bei der Rohrverlegung müssen die Stahlrohre aneinander gesetzt werden. Üblicherweise werden die Rohrleitungen an den Stoßstellen geschweißt. Zum Schweißen werden die Rohrenden in einem ausreichenden Umfang von der Isolierung befreit. Das wird als Abisolieren bezeichnet.

Bereits beim Abisolieren kommen diverse katastrophale Fehler vor.
Dazu gehören:
ein Durchschneiden der Isolierung bis in den Stahl,
eine falsche Wärmebehandlung der Isolierung zur Erleichterung des Abziehens der Isolierung, eine falsche Nachbehandlung der abisolierten Rohrflächen,
eine falsche Nachisolierung.

Zum Nachisolieren werden die Schweißstellen üblicherweise gesäubert und häufig mit Isolierungsbändern umwickelt. Es ist auch bekannt, Schrumpfmuffen zum Nachisolieren von Rohrstößen zu verwenden. Die Schrumpfmuffen sind vorzugsweise mehrteilig ausgebildet und werden vor dem Schweißen auf eines der zu verbindenden Rohrenden geschoben und zwar so weit, daß sie durch den Schweißvorgang nicht beschädigt werden. Nach dem Schweißen werden die Schrumpfmuffen über die Schweißstelle geschoben. Dabei wird eine ausreichende Überlappung mit der bestehenden Rohrisolierung gewahrt. Durch Erwärmung der Schrumpfmuffe mit offener Flamme tritt der Schrumpf ein. Die Schrumpfmuffe umschließt die beiden Rohre an dem Rohrstoß dicht.

Das Problem der Nachisolierung stellt sich nicht nur an den Rohrstößen bzw. Rohrverbindungen sondern auch an den sogenannten Abzweigung von Rohrleitungen bzw. Erdgasleitungen. Bei einem Hausanschluß an eine Erdgasleitung wird eine Leitung sehr viel kleineren Durchmessers mit der Erdgasleitung verbunden. Üblicherweise wird die Erdgasleitung im Anschlußbereich von der Isolierung befreit, ein ausreichendes Loch bzw. ausreichender Abgang in die Erdgasleitung eingebracht und ein Anschlußflansch bzw. Anschweißfitting als ein Teil der Anschlußleitung an die Erdgasleitung angeschweißt. Die Schweißstelle wird wiederum behandelt und danach mit den bekannten Bändern umwickelt. Die Erfindung geht davon aus, daß die bekannte Wickel- und Bänderisolierung nicht immer die optimale Isolierung ist. Aus Sicht der Erfindung ergeben sich auch Probleme mit unterschiedlichen Schichtdicken der Isolierung.
Die Erfindung hat auch erkannt, daß eine offene Flamme an der Kunststoffisolierung Probleme verursachen kann. Desgleichen kann das zum Reinigen von Stahlflächen und Rohrverbindungen eingesetzte Lösungsmittel Probleme verursachen. Das gilt auch für Voranstrich-Lack.

Zur Beseitigung obiger Probleme ist nach dem älteren Vorschlag der EP 1382896A2 vorgesehen, eine Schrumpfmuffe an der Verbindung von Leitungsrohr und Abzweigung einzusetzen. Vorzugsweise wird das mit einer Technik zum Abisolieren kombiniert, wie sie in der EP 0213061 beschrieben ist. Die bekannte Technik zum Abisolieren geht-davon aus, daß bei mehrschichtiger Isolierung mit einer Epoxid-Unterschicht(EP-Schicht) nur eine Durchtrennung der Isolierung bis zur EP-Schicht erfolgt und daß die EP-Schicht in einem Überlappungsbereich mit der Nachisolierung verbleibt. Zwischen dem Überlappungsbereich und dem zu verschweißenden Rohrende ist eine vollständige Abisolierung des Stahlrohres vorgesehen, um die Schweißstellen für den Schweißvorgang frei zu machen.

Die Erfindung hat sich auch die Aufgabe gestellt, eine einwandfreie Isolierung der neuen Rohre und/oder eine einwandfreie Nachisolierung der Schweißstellen nach dem Schweißen zu bewirken.

Nach der Erfindung wird das dadurch erreicht, daß die zusätzlich oder anstelle der EP-Schicht eine *Siliziumdioxid-*(SiO₂)-Schicht und/oder Titandioxid(TiO₂)-Schicht aufgebracht wird. Wahlweise kann auch *Siliziumdioxid* und/oder Titandioxid in Mischung mit dem EP oder mit dem Material des Kunststoffmantels bzw. mit dem Material der Kunststoffmuffe oder dem Kleber Einsatz finden.

Der Kunststoff gehört zur Kohlenstoff-Chemie.
Im periodischen System gehören die Kunststoffe zur Gruppe IV.
Beide Stoffe haben Doppelbindungen zwischen
-C = C-
Das bestimmt die chemischen Reaktionen mit sich und anderen Stoffen.
Das bestimmt auch den Energie-Umsatz in Netzwerkpotentialen.
Daher ergeben sich Reaktionen untereinander.
Aus einer Reaktion entsteht ein neuer Werkstoff.
Kunststoffe erfahren eine bedeutende Eigenschaftsnutzung.
Die Langzeitbenutzungsgröße von Kunststoffen liegt je nach Belastung zwischen wenigen Jahren und mehreren Jahrzehnten.
Danach ergibt sich ein deutlicher Eigenschaftsabfall.

Siliziumdioxid und Titandioxid gehören zur Phys.-Chemie.
Im periodischen System gehören Silikate zur Gruppe IV.

Es bestehen keine Doppelbindungen zwischen
-Si - Si-

Daher sind keine reinen chemischen sondern nur physikalische Reaktionen mit anderen Stoffen innerhalb der lsolierung bzw. mit anderen Stoffen zu erwarten, welche in die Isolierung eindringen.
Siliziumdioxid zeigt bei Energiezufuhr unterschiedliche Reaktionen. Es bilden sich je nach Energiezustand Kettenstrukturen, Flächenstrukturen und Blattstrukturen.
Es ist je nach Energiezustand mit einer Volumensvergrößerung entsprechend den physikalischen Gesetzes zu rechnen.
Zu den bedeutenden Eigenschaften gehört die Undurchlässigkeit gegen Kohlendioxid, der eine bedeutender Korrosionspartner bei herkömmlich isolierten Erdgasrohrleitungen aus Stahl ist.
Auch nach bei höherer Energiebelastung ist noch mit einer Dauerstandzeit von mehreren Jahrzehnten zu rechnen.

Zusammenfassend ergibt sich nach der Erfindung ein Kombiprodukt, dessen Bestandteile unterschiedlichen Gesetzen folgen, nämlich im einen Fall der Kohlenstoffchemie und im anderen Fall der Physikalischen Chemie. Die Silikat-Chemie verläuft nach den Regeln der Anorganischen Chemie unter Bildung von Ketten-, Flächen- und Blattstrukturen ab.
Allgemein ist von Metakieselsäuren (H₂SiO₃)ₙ und Metasilicaten (SiO₃)ₙ zu sprechen. In dem Zusammenhang kommen vor:

| | Kieselsäure | Silicate |
|---|---|---|
| als Kette | (H₂SiO₃) | (SiO₃") |
| als Band | (H₆Si₄O₁₁) | (Si₄O₁₁ """) |
| als Blatt | (H₂Si₂O₅) | (Si₂O₅'') |

Die Titandioxid-Chemie ist eine Ergänzung in beiden Chemie-Gruppen und trägt dazu bei, den Stahl zusätzlich zu schützen. Hervorzuheben ist die Kristallform "Rutil" im Epoxiharz-Bindeverfahren zum Stahl.

Mit Siliziumdioxid und/oder Titandioxid steigt die Temperaturbelastbarkeit der Isolierung, auch der Epoxiharzschicht bedeutungsvoll an.

Siliziumdioxid und/oder Titandioxid können in verschiedenen Schichten der Isolierung eingebaut werden:
a) als Schicht unmittelbar auf der Stahloberfläche und/oder
b) in Mischung mit EP oder in Mischung mit anderem Material unterhalb der bekannten EP-Schicht oder einer vergleichbaren Schicht
c) in Mischung mit dem EP oder einem anderen Material anstelle der bekannten EP-Schicht
d) als Schicht oberhalb der bekannten EP-Schicht oder einer vergleichbaren Schicht
e) in Mischung mit dem bekannten Kleber bzw. eingebettet in den bekannten Kleber
f) in Mischung mit dem bekannten Kleber oder einem anderen Material unterhalb der bekannten Kleberschicht
g) in Mischung mit dem bekannten Kleber oder einem anderen Material anstelle der bekannten Kleberschicht
h) in Mischung mit dem bekannten Kleber oder einem anderen Material oberhalb der bekannten Kleberschicht
i) als Schicht unterhalb der Kunststoffaußenschicht(aus PE oder einem anderen Thermoplasten oder Mischungen davon)

Besonders günstig lassen sich das Siliziumdioxid und das Titandioxid in Verbindung mit dem Kleber auftragen. Der Kleber kann dabei den Haftvermittler für das Siliziumdixid und/oder das Titandioxid bilden. Besonders leicht läßt sich eine Mischung von Siliziumdioxid und/oder Titandioxid und dem Kleber aufbringen.
Darüber hinaus kann von Vorteil sein, das Siliziumdioxid und/oder Titandioxid so aufzubringen, daß geschlossene Schichten aus diesem Material entstehen.

Die erfindungsgemäße Anwendung von Siliziumdioxid und/oder Titandioxid kann sowohl bei der Neuisolierung(Rohrherstellung) als auch bei der Nachisolierung(spätere Arbeiten) erfolgen. Allerdings können die verschiedenen Isolierungsarbeiten Detailabweichungen zweckmäßig machen. Zum Beispiel ist im Falle einer Nachisolierung zweckmäßigerweise eine Schrumpfmuffe vorgesehen, die eine Beschichtung an der Innenseite erlaubt.

Bei der Neuisolierung wie auch bei der Nachisolierung wird eine haftungsfreundliche Rohroberfläche angestrebt. Günstig sind gereinigte Oberflächen.

Für das Reinigen kommen diverse Verfahren in Betracht. Das schließt mechanische Verfahren wie das beschriebene Bürsten und Sandstrahlen oder Strahlen mit Stahlpartikeln ein.
Zum Teil ist die Reinigung schwierig.
Hintergrund ist, daß nach der Bearbeitung der Rohre mit ölhaltigen Emulsionen oder anderen fetthaltigen Mitteln oder auch mit Korrosionsschutzmitteln wie Magnesiumstearat erhebliche Rückstände verbleiben. Bei anschließendem Aufrauhen der Rohroberfläche durch Strahlen mit Strahlmittel stören die Rückstände. Zum Teil verhindern die Rückstände die gewünschte Rauhigkeit, zum Teil bleiben die Rückstände in den Materialporen, zum Teil sammeln sich die Rückstände in dem Strahlmittel, so daß die Wirksamkeit der Strahlmittel nachläßt.

Eine wesentliche Verbesserung der Rohroberfläche wird dadurch erreicht, daß die Rückstände durch Wärmebehandlung auf der Rohroberfläche verkrackt werden. Anschließend lassen sich die so behandelten Rückstände leicht von der Rohroberfläche lösen. Das Lösen kann mechanisch erfolgen, z.B. durch Bürsten. Wahlweise verbleiben die Rückstände auch in gebundener Form auf der Rohroberfläche.

Je stärker die Wärmebehandlung ist, desto schneller und vollständiger,verkracken die Rückstände. Vorzugsweise wird die Erwärmung des Rohres auf max. 200 Grad Celsius beschränkt, um eine Beeinträchtigung des Stahlgefüges zu vermeiden. Vorzugsweise wird mindestens eine Erwärmung von 160 Grad Celsius an der Rohroberfläche erzeugt. Die Erwärmung der Rohroberfläche kann durch Strahlung und/oder Berührung der Rohroberfläche mit dem Heizmittel bewirkt werden. Als Heizmittel kommen Heizgase in Betracht, desgleichen Heizstrahler. Die Heizgase und Heizstrahler werden im Abstand von der Rohroberfläche gehalten. Als Heizmittel kommen auch Heizmatten in Betracht, die auf die Rohroberfläche gelegt werden.

Die Wärmebehandlung kann vor oder nach dem Strahlen er folgen.

Die Wärmebehandlung kann bei der Rohrherstellung oder bei der Rohrverlegung Anwendung finden. Bei der Rohrherstellung findet immer regelmäßig eine Druckprüfung mit einer Öl-Wasser-Emulsion statt. Die Rohre werden dabei an den ungeschützten Flächen, auch außen an den Rohrenden mit der Emulsion verschmutzt.

Alternativ oder zusätzlich zur Wärmebehandlung kann die Rohroberfläche nach dem Strahlen mit Kaliumpermanganat behandelt werden.
Mit dem Kaliumpermanganat wird das Chromatieren ersetzt. Beim Chromatieren wird eine Chromverbindung mit 6facher Bindungswirkung aufgetragen. Diese Chromverbindung ist sehr giftig. Nach der Reaktion mit Öl reduziert sich zwar die Wertigkeit der Chromverbindung auf eine 3fache Wertigkeit. Nach der Reaktion ist die Chromverbindung ungiftig. Gleichwohl bleibt die hohe Anfarrgsgiftigkeit, welche die Anwendung der Chromatierung in der Bundesrepublik Deutschland bisher verhindert hat.
Das Kaliumpermanganat ist ungiftig. Das Kaliumpermanganat ist sogar als pharmazeutisches Mittel in der Anwendung. Mit Kaliumpermanganat wird Öl oxidiert.
Das Kaliumpermanganat wird vorzugsweise in wässriger Lösung eingesetzt. Der Anteil des Kaliumpermanganats im Wasser beträgt vorzugsweise 1 bis 5Gew%. bezogen aufdie Gesamtmenge aus Wasser und Kaliumpermanganat. Von Vorteil für die Reaktion des Kaliumpermanganats bzw. für die Oxidation des Öls ist eine über der Raumtemperatur liegende Temperatur der wässrigen Lösung. Vorzugsweise liegt die Temperatur zwischen 50 und 60 Grad Celsius
Die wässrige Lösung kann aufgesprüht oder aufgespritzt werden. Je nach Druck trägt das Spritzen zur Reinigung der Oberfläche bei.
Die ablaufende wässrige Lösung wird mechanisch gereinigt. Zum Beispiel wird der anfallende Schlamm mit geeigneten Filtern aus der Lösung abgeschieden. Danach kann die wässrige Lösung wieder auf die Rohroberfläche aufgegeben werden. Der Kreislauf der wässrigen Lösung wird mit einer geeigneten Pumpe bewirkt.

Wahlweise schließt wird das Ablaufen der wässrigen Lösung noch durch andere Wirkungen unterstützt werden. Geeignet sind Abstreifer bzw. Bürsten. Die Bürsten können im oder nach dem Aufschlagbereich der wässrigen Lösung angeordnet sein. Die Bürsten können stehend angeordnet oder bewegt sein.

Die gereinigte Fläche bietet bei richtiger Rauhigkeit eine ausreichende Haftung für die dichte Verbindung mit einer Schrumpfmuffe. Die richtige Rauhigkeit kann in einem Fall bei 0.05mm liegen, in anderen Fällen können Rauhigkeiten von 0, 005 bis 0, 5 mm zweckmäßig sein. Die Rauhigkeit kann durch Schältests optimiert werden. Beim Schältest wird die Kraft gemessen, die zum Abziehen der Isolierung von der Rohroberfläche erforderlich ist. Zweckmäßigenveise wird die Isolierung zum Schiiltest eingeschnitten, so daß die Isolierung zum Abziehen erfaßt werden kann.
Vorzugsweise ist darüber hinaus zwischen der gereinigten Stahlfläche und der Schrumpfmuffe ein Haftvermittler vorgesehen. Der Haftvermittler kann ein Kleber sein.
Wahlweise ist zusätzlich eine Lackierung der gereinigten Stahlfläche für die Haftvermittlung vorgesehen. Desgleichen kann eine Beschichtung mit einem EP-Pulver zur Haftvermittlung erfolgen, das dann auf der gereinigten Stahlfläche aufgeschmolzen und ausgehärtet wird.

Die Aufbringung von pulverförmigem EP sieht vorzugsweise einen Korndurchmesser von 0,01mm bis 0,02 mm vor. Je kleiner der Korndurchmesser des Pulvers ist und je genauer die Aufschmelzung erfolgt, desto gleichmäßiger bildet sich eine EP-Schicht auf dem vollständig abisolierten Rohrende aus.
Korngrößen kleiner oder gleich 0,005 mm werden jedoch nach Möglichkeit vermieden, wenn die beteiligten Mannschaften mit dem Pulver in Berührung kommen können. Bei solch kleinkörnigem Pulver wird eine Belastung der Lungen befürchtet.
Sofern die Aufbringung des EP-Pulvers mit geeigneter Kapselung erfolgt, ist die oben beschriebene Korngrößengrenze unbeachtlich.

Zur Gleichmäßigkeit trägt auch die Art des Pulverauftrages bei.
Günstig ist es, das Pulver aufzustreuen und/oder aufzublasen und/oder aufzuschleudern. Zum Aufschleudem wird auf die oben erwähnte Veröffentlichung Bezug genommen. Um die Nachisolierungsstellen herum kann auch ein Wirbelbett aufgebaut werden. Auch die Kombination verschiedener Verfahren kann von Vorteil sein, z.B. das Streuen von oben und das Schleudern von unten.

Beim Aufbringen können Pulver und/oder Beschichtungsflächen vorgewärmt werden. Desgleichen kann mit einem erwärmten Trägergas zum Anblasen des EP-Pulvers gearbeitet werden. Vorzugsweise ist eine Vorwärmung des EP auf höchstens 50 Grad Celsius beschränkt. Das Trägergastemperaturen und die Oberfläche können höher sein, vorausgesetzt, das EP erwärmt sich nicht so weit, daß eine Aushärtung des EP beginnt.
Die Erwärmung kann auch in anderer Form aufgebracht werden, zum Beispiel durch Heißgas und/oder durch Strahlung und/oder auf induktivem Wege. Die Strahlungswärme beinhaltet wahlweise eine Beaufschlagung mit Infrarotlicht.

Die Wärme kann von außen und/oder von innen aufgebracht werden.

Bei der Neuisolierung von Stahlrohren wird vorzugsweise die Wärme aus der Rohrherstellung zum Aufschmelzen und Aushärten der EP-Schicht genutzt.
Bei der Nachisolierung kann die Wärme induktiv im Stahlrohr erzeugt werden und hinsichtlich der Wärme eine ähnliche Situation wie bei der Neuisolierung entstehen. Wahlweise ist es auch möglich, die zum Aushärten von EP erforderliche Wärme durch andere Schichten, nämlich durch PE und Kleber, hindurch zuzuführen.

Wahlweise findet beim Neuisolieren eine Erwärmung des EP ohne üblichen Wärmeinhalt der verwendeten Rohre statt. Damit geht zwar der Wärmeinhalt verloren. Es eröffnet sich aber die Möglichkeit zu einer Beschleunigung der Fertigung, weil für das Aufschmelzen und Aushärten der EP-Schicht mit zunehmender Aushärtungstemperatur die Aushärtungsdauer reduziert werden kann. Damit wird der Mehraufwand an Energie leicht überkompensiert.

Wahlweise kann die von der Herstellung der Rohre unabhängige Erwärmung der EP-Schicht/Isolierung auch genutzt werden, um den Verlauf der Aushärtung und die Härtedauer nach Belieben zu steuern. Dadurch kann eine optimale Härtung des EP erreicht werden. Beim Nachisolieren der Rohre in der Baugrube steht einer längeren Wärmebehandlung der Isolierung nichts entgegen, wenn die Rohrleitung an mehreren Stellen nachzuisolieren ist und die Isolierungsmannschaft sich bei fortdauernder Wärmebehandlung an einer Isolierungsstelle mit den Arbeiten an anderen Isolierungsstellen befassen kann.

Aufgrund der Erwärmung des EP-Pulvers kann das EP-Pulver unmittelbar beim Auftreffen auf der Beschichtungsfläche kleben. Das Kleben der auftreffenden Pulverpartikel erleichtert die gleichmäßige Beschichtung.
Die Erwärmung wird so gesteuert, daß die Pulverpartikel auf der Stahloberfläche aufschmelzen. Bei der Steuerung der Erwärmung sind der Wärmefluß bis zu der EP-Schicht und auch Wärmeverluste auf dem Weg zur EP-Schicht zu berücksichtigen. Wenn die Erwärmung von dem Stahlrohr ausgeht ist die Situation anders als bei einer Erwärmung der EP-Schicht von außen. Das gilt besonders bei einer Erwärmung, die durch den außen liegenden Kunststoffmantel hindurchgehen soll. Letzteres kann sich zum Beispiel bei der Nachisolierung mit Schrumpfmuffen an der Isolierungsstelle anbieten.

Außerdem sind die zulässigen Temperaturen der verschiedenen Schichten zu berücksichtigen, die von der Wärme auf dem Weg zur EP-Schicht durchflossen werden. Die zulässigen Temperaturen dürfen nicht überschritten werden.

Für die Beschichtung ist ferner die geringe Dicke der EP-Schicht günstig. Die Dicke beträgt 0, 01 bis 0,1 mm, vorzugsweise 0,04 bis 0,06 mm, noch weiter bevorzugt 0,05 mm.
Bei der geringen Schichtdicke ist die Kräfteverteilung günstig. Das erweichte EP verläuft zu einer Schicht, ohne abzutropfen. Nicht einmal Tropfnasen sind bei geringer Schichtdicke zu befürchten. Das gilt besonders, wenn Siliziumdioxid eingebaut wird.

Das erfindungsgemäße Material hat sehr vorteilhafte thixotrope Eigenschaften.

Es kommen auch andere Beschichtungsverfahren für das Aufbringen des EP-Pulvers in Betracht. Zu den anderen Beschichtungsverfahren gehört eine statische Aufladung der Stahlfläche und des Pulvers, so daß das Pulver aufgrund der Ladungskräfte an der gereinigten Stahl fläche haftet. Danach kann das Pulver durch die oben beschriebene Erwärmung zu einer Schicht verschmolzen werden.
Nach dem Aufschmelzen soll die EP-Schicht aushärten.
Die Aushärtung des EP erfolgt abhängig von der Materialbeschaffenheit. Das gilt zumindest für das EP-Material. Je nach EP-Material kann eine Glasübergangstemperatur von 55 bis 90 Grad Celsius maßgebend sein

Die Aushärtetemperatur der EP-Schicht kann auch zwischen 130 und 200 Grad Celsius liegen. Bei geringerer Aushärtetemperatur ist eine längere Aushärtezeit vorgesehen. Je nach Temperatur kann die Aushärtezeit zum Beispiel 30 min betragen. Solche Aushärtezeiten sind aus der üblichen Herstellung neuer Rohre bekannt.

Die übliche Rohrisolierung erfolgt bei der Rohrherstellung üblicherweise kontinuierlich. Die Nachisolierung erfolgt überlicherweise diskontinuierlich. Dabei werden die genannten Aushärtezeiten von 30min aufgrund der Länge der Wärmebehandlungseinrichtungen und aufgrund des Verfahrens unproblematisch empfunden. Bei üblichem Verfahren ergeben sich genormte Eigenschaftswerte, welche einer Verfahrensänderung entgegenstehen.

Wie oben ausgeführt, hat das wärmetechnische Gründe, die unberücksichtigt bleiben können, wenn in erfindungsgemäßer Weise die Aushärtetemperatur erhöht und die Aushärtezeit verringert werden.

Etwas anderes gilt auch für die Nachisolierung. Bei der Nachisolierung bedingt eine so lange Aushärtezeit eine entsprechende Verweildauer der Mannschaft an der Nachisolierungsstelle. Wahlweise wird die Aushärtezeit verringert, um die Nachisolierungszeit und damit auch die Kosten zu verringern. Nach dem älteren Vorschlag wird durch Auswahl von EP mit höherer Glasübergangstemperatur und mit höherer Aushärtetemperatur eine wesentliche Verringerung der Aushärtezeit erreicht. Überraschender Weise kann die Aushärtezeit auf 20min, 10 min, 5min, sogar bis auf 2 min reduziert werden.
Die Verringerung der Aushärtezeit ist auch unabhängig von der Frage der Nachisolierung für die Rohrisolierung von Vorteil, weil dadurch weniger Anlagevolumen für die Rohrisolierung erforderlich ist, weil auch weniger Energie für die Aushärtung eingebracht werden muß

Die notwendige Erwärmung für die Aushärtung wird in gleicher Weise wie für die Verschmelzung aufgebracht werden.
Nach dem älteren Vorschlag wird wahlweise zusätzlich die Wärme der Schrumpfmuffe für die Aushärtung genutzt. Umgekehrt kann auch die Wärme der Rohrverbindung oder Abzweigung für den Schrumpfvorgang genutzt werden.

Zur Beinflussung der Aushärtung der EP-Schicht und/oder zur Beeinflussung des Schrumpfvorganges schließt sich der Schrumpfvorgang der Schrumpfmuffe vorzugsweise zeitlich möglichst dicht an die Bildung der EP-Schicht an. Dabei muß die Schrumpfmuffe nach Bildung der EP-Schicht über die Verbindungsstelle bzw. über die Abzweigstelle gezogen werden. Je nach Handhabung der Schrumpfmuffe kann es erforderlich werden, vor der Positionierung der Schrumpfmuffe zunächst eine ausreichende Festigkeit bzw. Eigenfestigkeit der EP-Schicht durch Abkühlung sicherzustellen, damit eine Berührung der Schrumpfmuffe keine Verletzung der EP-Schicht verursacht.
Nach der Positionierung der Schrumpfmuffe wird die Schrumpfmuffe auf Schrumpftemperatur erwärmt. Dabei ist es von Vorteil, die Muffe innen und außen zu erwärmen. Die Erwärmung von innen kann wahlweise mit Heißgas und/oder durch die noch warme EP-Schicht erfolgen. Es kommen auch andere Erwärmungsvorgänge in Betracht.

Die Schrumpftemperatur ist materialabhängig.

Die höhere Glasübergangstemperatur und die höhere Aushärtetemperatur sind bei dem EP von den Bausteinen/Bestandteilen des EP abhängig. Für harte EP-Schichten finden aromatische Dicarbonsäuren Verwendung. Für flexible EP-Schichten finden aliphatische Dicarbonsäuren Verwendung.
Günstig ist regelmäßig eine Stabilisierung des Makromoleküls. Dazu eignen sich besonders sekundäre Wasserstoffbrücken.

Die Glasübergangstemperatur ergibt sich als ein relativ geringes Temperatur-Intervall zwischen energieelastischem und entropieelastischem Verhalten. Die Übergangstemperatur dieser Veränderung ist die Veränderung des E-Moduls des Produktes und wird als Glasübergangstemperatur bezeichnet. Normalerweise liegt die Glasübergangstemperatur bei EP zwischen +20 und +40 Grad Celsius. In Sonderfällen liegt die Glasübergangstemperatur bei EP zwischen -100 und +100 Grad Celsius.

Wie oben beschrieben, kommt zusätzlich oder anstelle der EP-Schicht noch eine SiO₂-Schicht auf dem Rohr in Betracht. Vor allem die zusätzliche Schicht trägt erheblichem zum Korrosionsschutz bei. Die SiO₂-Schicht ist praktisch für Kohlendioxid, Sauerstoff und Wasser undurchlässig. Eine sonst befürchtete Korrosion

Fe + O₂ + CO₂ + H₂O zu Fe₂O₃

wird verhindert. Hierdurch wird ein Korrosionsvorgang des Stahls im Eisen-Anteil vermieden und die Langzeitnutzung des Stahlrohrsystems auch unabhängig von Kathodenschutz wesentlich verlängert. Das Kohlendioxid als Korrosionspartner wird ausgeschlossen.

Es ist technisch von Vorteil, als SiO₂ ein α-Tridymit zu verwenden, welches in reiner Form bei 117 Grad Celsius sich in β-Tridymit umwandelt. Verunreinigungen des Tridymits führen zu einer Temperatur-Verschiebung, zumeist zu einer Erhöhung des Umwandlungspunktes. Es ist wirtschaftlich von Vorteil, als Siliziumdioxid ein Cristobalit zu verwenden.

Durch Verwendung von Siliziumdioxid findet in dieser Schicht durch die Erwärmung eine Volumensvergrößerung statt, die den darüber liegenden Kunststoffinantel bzw. die Schrumpfmuffe unter zusätzlicher Spannung hält, so daß Hohlräume verhindert werden.

Darüber hinaus kann eine vorteilhafte Kombination durch Reaktion mit der EP-Schicht bei einer Temperatur im Bereich von 130 bis 180 Grad Celsius erreicht werden. Das Siliziumdioxid ist für jede Aushärtetemperatur geeignet.

Die vorstehend beschriebenen Vorteile ergeben sich nicht nur bei der Nachisolierung sondern auch bei der Herstellung der Stahlrohre mit werksseitiger Isolierung der Stahlrohre, insbesondere in Ummantelungsformen.

Die Aufbringung des Siliziumdioxids kann wie die Aufbringung der EP-Schicht erfolgen. Günstig sind dabei Körnungen des Siliziumdioxids von 0,008 bis 0,03 mm.

Wahlweise werden das Siliziumdioxid und das Titandioxid im Pulver-Aufschmelzverfahren aufgebracht. Dabei ist kein Schmelzen des Siliziumdioxids oder Titantioxids sondern das Schmelzen eines anderen Mischungsanteiles vorgesehen. Der Mischungsanteil wird entsprechend dem Schmelzpunkt ausgewählt. Das Pulver wird vorzugsweise mit mindestens 50 Grad Celsius vorgetrocknet und vorgewärmt aufgetragen.
Vorteilhafterweise können die gleichen Vorrichtungen wie beim Aufbringen der EP-Schicht für das Aufbringen von Siliziumdioxid und für das Aufbringen von Titandioxid verwendet werden. Desgleichen ist von Vorteil, eine elektrostatische Aufladung anzuwenden, um eine Haftung der Partikel zu erreichen.

Im folgenden wird eine vorteilhafte Schichtenbildung aus Siliziumdioxid und/oder Titandioxid beschrieben. Soweit dabei nur Siliziumdioxid erwähnt ist, so schließt das grundsätzlich Zumischungsanteile von Titandioxid und auch eine vollständige Ersetzung von Siliziumdioxid durch Titandioxid ein. Die nachfolgend für die alleinige Anwendung von Siliziumdioxid gemachten Mengenangaben können dabei eine Änderung erfahren, die mit wenigen vergleichenden Versuchen festgelegt werden kann.

Das Siliziumdioxid und/oder Titandioxid wird in Mischung mit einem Material aufgetragen, welches eine Klebewirkung hat. Wahlweise wird das Material ganz oder teilweise nach dem Auftragen durch eine Wärmebehandlung verflüchtigt. Ein solches Material ist zum Beispiel ein Isobutylen, insbesondere Polyisobutylen.
Die Klebewirkung kann durch Einmischung zusätzlicher Kleber, z. B. von Kolophonium bzw. Balsamharz verstärkt werden.

Wahlweise wird eine Mischung aus Polyisobutylen und Siliziumdioxid in der Form von Tridymit aufzutragen. Das Polyisobutylen wird in der Ausführung Oppanol B der BASF aufgetragen. Die Palette der Oppanol B-Proctukte umfaßt den, ganzen Molekulargewichtsbereich von Oligomeren von niedermolekulargnewichtigen bis zu hochmolekulargewichtigen Produkten. Die niedermolekulargewichtigen Produkte sind ölige Flüssigkeiten, die mittelmolekulargewichtigen sind zähe klebrige Massen. Vorzugsweise finden die niedrigmolekulargewichtigen Polyisobutylenprodukte, die sich schon unter verhältnismäßig geringer Wärmeeinwirkung verflüchtigen, und höhermolekulargewichtige Polyisobutylenprodukte, die als Kleber verbleiben, Anwendung.
Dabei kommen vorzugsweise Siliziumdioxid-Anteile mit mehr als 50 Gew% zur Anwendung, bezogen auf die Gesamtmenge von Siliziumdioxid und Polyisobutylen. Günstige Verhältnisse ergeben sich bei einem Siliziumdioxid-Anteil von 80 bis 90 Gew%.

Von dem Rest der Auftragsmenge hat zum Beispiel das niedrigmolekulargewichtige Polyisobutylen einen Anteil bis 100 Gew%, vorzugsweise mindestens einen Anteil von 50Gew%. noch weiter bevorzugt mindestens 60Gew% und höchst bevorzugt mindestens 70Gew%. Die vorstehenden Gew-Anteilangaben können die Mengen klebriger Polyisobutylen-Anteile einschließen. Das sind mittelmolekulargewichtige oder hochmolekulargewichte Polyisobutylene.
Wahlweise können auch sonstige klebrige Bestandteile dazugehören.
Vorzugsweise beträgt der Anteil klebriger Bestandteile an dem genannten Rest der Auftragsmenge mindestens 10Gew%, noch weiter bevorzugt mindestens 15Gew% und höchst bevorzugt mindestens 20Gew%.

Beispielsweise beträgt in der Menge an Polyisobutylen der niedrigmolekulargewichtige Anteil 75 bis 95Gew%, der mittelmolekulargewichtige Anteil 2,5 bis 7,5Gew%. Wahlweise ist auch in dem Rest der Auftragsmenge noch ein Zusatz sonstiger Kleber enthalten, vorzugsweise Paraffin und Kolophonium bzw. Balsamharz. Die Menge Paraffinmenge beträgt dann vorzugsweise 2,5 bis 7,5Gew%, die von Kolophonium 2,5 bis 17,5Gew%, bezogen auf die Menge aus Polyisobutylen, Paraffin und Kolophonium.

Polyisobutylen zeichnet sich aus durch Beständigkeit gegen Alterung und gegen chemische Einwirkung sowie durch ihre Klebfreudigkeit aus. In der Mischung mit hohermolekulargewichtigem Polyisobutylen und ggfs. mit sonstigem Kleber ist eine ausreichende Haftung des Siliziumdioxids auf der Rohroberfläche gewährleistet.

Nach dem Polyisobutylenauftrag ist eine Erwärmung der Rohroberfläche vorgesehen. Vorzugsweise findet bei einem Tridymitauftrag eine Erwärmung auf 100 bis 110 Grad Celsius ohne mechanische Belastung des Auftrages statt. Dazu eignet sich besonders eine induktive Erwärmung der Rohroberfläche.

Durch die Erwärmung verflüchtigt sich das niedrigmolekulargewichtige Polyisobutylen. Es verbleibt eine geschlossene Siliziumdioxid-Schicht auf der Rohroberfläche. Diese Schicht enthält ggfs. mittelmolekulargewichtige Polyisobutylen-Bestandteile und andere Mischungsbestandteile, die sich nicht unter der Wärmeeinwirkung verflüchtigen.

Auf die so entstandene Siliziumdioxid-Schicht kann ein weiterer Kleber als Schicht aufgetragen werden. Wahlweise handelt es sich um einen Kleber, wie er herkömmlich unter einer EP-Schicht verwendet wird. Es kommen auch diverse andere Kleber in Betracht. Wahlweise enthält auch der Kleber einen Zumischungsanteil aus Siliziumdioxid.
Auf den Kleber wird wahlweise eine PE-Schicht aufgetragen und bei jeweils günstiger Temperatur ausgehärtet. Diese Temperatur liegt vorzugsweise bei 165 bis 185 Grad Celsius. Der Kleber ist wahlweise ein Copolymer-Kleber, z.B. ein Butylkautschuk-Kleber.
Günstig kann auch die Verwendung von Paraffin in Mischung mit Kolophonium bzw. Balsamharz sein. Überraschenderweise hat diese Mischung eine vorteilhafte Klebewirkung.

Die PE-Schicht wird bei großen Rohren regelmäßig gewickelt.
Bei kleinen Rohren wird vorzugsweise ein Schlauch auf das Rohr gezogen bzw. ein das Rohr umgebender Schlauch erzeugt.

Obige Technik findet wahlweise bei der Herstellung der Rohr mit anschließender Isolierung Anwendung. Die Technik kann aber auch beim oben beschriebenen Nachisolieren Anwendung finden..

Die oben beschriebenen Siliziumdioxidschichten und Titandioxidschichten bewirkt eine wesentliche Verbesserung des bekannten Schichtenschutzes an Stahlrohren.

Günstig ist dabei die Einhaltung einer Dünnschicht, bei der die Adhäsionskräfte der Partikel groß genug sind, um sie an der Rohroberfläche zu halten.

Für die Haftung der Isolierung auf der Rohroberfläche ist auch maßgebend, welche Rauhigkeit die Oberfläche des Stahlrohres besitzt. Die Rauhigkeit kann in weiten Grenzen durch Stahlstrahlen oder ähnliche Behandlung der Rohroberfläche bei dessen Reinigung vor der Nachisolierung eingestellt werden. Die richtige Rauhigkeit für das jeweils verwendete Material kann mit einigen Versuchen eingestellt werden.

Siliziumdioxid ist in der Natur weitverbreitet und findet sich sowohl in kristallisierter wie auch in amorpher Form. Kristallisiert kommt es in drei verschiedenen Kristallarten vor: als Quarz, als Tridymit und als Cristobalit. Es wird unterschieden zwischen α-, β-, γ-Tridymit und α-,β-, γ-Cristobalit.
Die übliche Erscheinungsform ist dabei der Quarz.
α-Tridymit hat eine metastabile Form. Die Zusammenhänge sind in dem nachfolgenden Zustandsdiagramm für *Siliziumdioxid* dargestellt. Wahlweise lassen sich die unterschiedlichen *Siliziumdioxide* auch künstlich herstellen.
Die unterschiedlichen Vorkommen ermöglichen in einfacher Form eine Mischung von unterschiedlichem Siliziumdioxid.

Vorzugsweise ist eine Mischung aus Tridymit mit einem Umwandlungspunkt und Cristobalit vorgesehen.

Bei der Anwendung einer EP-Schicht ist es von Vorteil, wenn unter der EP-Schicht und/oder über der EP-Schicht eine Schicht aus *Siliziumdioxid* als eine eigenständige, in sich geschlossene Schicht besteht.
Dem Auftragen des Siliziumdioxids mit den oben beschriebenen Polyisobutylenzumischungen oder dergleichen Zumischungen ist die Eigenwärme der Kleberschicht von mindestens 150 Grad Celsius und die Eigenwärme der anschließend aufgebrachten PE-Schicht von mindestens 165 Grad Celsius förderlich.

Bei der beschriebenen Siliziumdioxid-Mischung hat der Mischungsanteil mit dem Umwandlungspunkt von 117 Grad Celsius wahlweise einen Anteil von 95 bis 99Gew% an der gesamten Siliziumdioxid-Mischung. Die jeweils restlichen Gew% können durch das *Siliziumdioxid* mit dem Umwandlungspunkt von 210 bis 250 Grad Celsius dargestellt werden. Dabei handelt es sich dann vorzugsweise um 5 bis 1 Vol% Cristobalit.
In anderen Mischungen kann Cristobalit, das sehr preisgünstig verfügbar ist, den Hauptbestandteil bilden.
Jeder Mischungsanteil kann eine andere Korngröße bzw. ein anderes Kornband besitzen. Zum Beispiel kann der eine Mischungsanteil eine Korngröße von 0,008 bis 0,015 mm und der andere Mischungsanteil eine Korngröße von 0,015 bis 0,03 mm besitzen.
Die Schichtdicke einer erfindungsgemäße Siliziumschicht beträgt wahlweise 0,005 bis 0,02 mm.

Der Zustand des *Siliziumdioxids* in der Schicht ändert sich bei Erwärmung.
Bei einer Zustandsänderung mit Überschreitung eines höheren Umwandlungspunktes wird Energie aufgenommen und ggfs. gespeichert. Die Energie wird der Umgebungswärme oder einer elektrischen Ladung des Umfeldes entnommen. Dies wird im folgenden als höherer Zustand bezeichnet. Im höheren Zustand verbessern sich einige gewünschten Isolierungseigenschaften des *Siliziumdioxids.* Das heißt, unter Wärmebelastung und Strombelastung wird die *Siliziumdioxid*schicht noch besser, während sich herkömmliche Beschichtungen, die nur aus Thermoplasten bestehen, verschlechtern.

Vorteilhafterweise ist die erfindungsgemäße Isolierung nicht toxisch, so daß die Handhabung problemlos ist, desgleichen die Verlegung im Erdreich.
Auch beim Schweißen sind keine nachteiligen Folgen für die Rohrverleger oder für die Umwelt oder für das Stahlrohr zu erwarten, wenn die *Siliziumdioxid*schicht der Schweißwärme ganz oder teilweise ausgesetzt wird.
Die *Siliziumdioxid* bleibt bis zum Schmelzpunkt stabil, der bei reinem *Siliziumdioxid* bei 1700 Grad Celsius liegt.
Weitere Vorteile ergeben sich durch die Trocknung des *Siliziumdioxids.* Aufgrund entsprechenden Trocknungsgrades reduziert sich ein möglicher Volumenschrumpf. Vorzugsweise wird die Trocknung so weit getrieben, daß die Volumensvergrößerung bei einer Zustandsänderung bzw. Änderung der Konfigurationsstufe den Schrumpf stets überwiegt. Die Volumensvergrößerung erfolgt bei 117 bis 119 Grad Celsius und bei 210 bis 250 Grad Celsius

Durch den vernachlässigbaren Schrumpf werden Spannungen vermieden.

Ganz besondere Vorteile ergeben sich gegenüber der Belastung der Isolierung aus Bremsströmen bzw. Streuströmen. Die *Siliziumdioxidschicht* hat nämlich eine ähnliche Dielektrizitätsgröße wie PE. Dadurch wird in dieser Hinsicht die bisherige Isolierung wesentlich gesteigert, wobei die Standzeit der Siliziumschicht wesentlich länger als die Standzeit von PE oder anderem Kunststoff ist.

Im Vergleich zu einem Schichtenschutz gemäß dem älteren Vorschlag nach der EP 138289A2 ergeben sich mit einer *Siliziumdioxid*/Titandioxidschicht folgende Aushärtetemperaturen und Härtezeiten.

| | 1 | 2 | 3 | 4 | 5 |
|---|---|---|---|---|---|
| 1 | EP-Vorkondensat | 100 | 92,5 | 87,5 | - |
| 2 | TiO₂ | 0 | 2,5 | 2,5 | - |
| 3. | SiO₂ | 0 | 5,0 | 10,0 | - |
| 4 | Aushärtetemp.in°C | 130- 180 | 180 | 180 | 5' |
| 5 | Aushärtetemp.in °C | - | 150 | 150 | 10' |
| 6 | Aushärtetemp. in °C | - | 130 | 130 | 15' |
| 7 | %Anteil o. Härtezeit | %Anteil | %Anteil | %Anteil | Härtezeit |

Vorzugsweise werden die Vorteile erfindungsgemäßer Siliziumdioxidschichten und/oder Titandioxidschichten auch beim Nachisolieren genutzt.

Wie oben beschrieben wird das Nachisolieren erforderlich, wenn Rohrenden miteinander verbunden werden oder wenn ein Anschluß der Rohrenden erfolgen muß. Desgleichen findet eine Nachisolierung nach der Herstellung von Abzweigungen statt.

Für die Nachisolierung ist es von Vorteil, die Rohrenden mit der Nachisolierung auf größerer Länge zu überlappen. Das gilt besonders für geringere Aushärtetemperatur. Die Überlappung kann zum Beispiel 50 bis 300 mm Länge je Rohrende besitzen.

Die Schrumpfmuffe übergreift in der Isolierstellung beide miteinander verbundene Rohrenden. Dabei erstreckt sich die Schrumpfmuffe vorzugsweise bis über den beim Abisolieren stehen gebliebenen EP-Streifen auf die vom Abisolieren unberührte Rohrisolierung.

Die Anwendung der Schrumpfmuffe beschränkt sich bisher nur auf gerade Rohrverbindungen Für Abzweigungen gibt es keine Schrumpfmuffen.

Nach der Erfindung ist für Abzweigungen eine Schrumpfmuffe vorgesehen, welche zumindest teilweise der Abzweigung angepaßt ist. Die Anpassung kann verschieden erfolgen:

Wahlweise wird dabei eine Schrumpfmuffe verwendet, die entsprechend groß ist und an der Stelle der Abzweigung mit einer Öffnung versehen ist, so daß die Schrumpfmuffe über die Abzweigung gezogen werden kann und die Abzweigung nach dem Schrumpf durch das Loch hindurch ragt. Dadurch erleichtert sich die Isolierung schon wesentlich. An der Abzweigung kann in herkömmlicher Wicklung ein Anschluß der Isolierung an die Schrumpfmuffe erfolgen.
Die montierte Abzweigung kann danach gleichfalls mit einer als Schrumpfteil ausgebildeten Kappe oder dergleichen umschlossen werden.

Wahlweise wird eine T-förmige Schrumpfmuffe verwendet, die an der Stelle der Abzweigung nicht nur das Loch sondern zusätzlich einen der Abzweigung bzw. dem Anschweißfitting nachgebildeten Rohrstutzen aufweist. Die Schrumpfmuffe wird wie die zuvor erläuterte Schrumpfmuffe gehandhabt, kann aber sowohl die Erdgasleitung als auch die Abzweigung umschließen.

Wahlweise umfaßt die Schrumpfmuffe auch nur die Abzweigung. Dann kann in herkömmlicher Wicklung mit Isolierungsbändern ein Anschluß der Isolierung an das Leitungsrohr erfolgen.

Sofern die Abzweigung beim Neubau der Erdgasleitung geplant ist, kann die Schrumpfmuffe auf das entsprechend vorbereitete Stahlrohr der Erdgasleitung gezogen werden. In anderen Ausführungsformen wird die Schrumpfmuffe aus Teilen zusammengesetzt und/oder überlappend um das Stahlrohr verlegt.

Wie oben beschrieben, erfolgt die Vorbereitung der Erdgasleitung für *eine Abzweigung* durch Einbringen einer Öffnung in die Stahlleitung und durch Anschweißen eines Stahlflansches für die Abzweigung. Vorzugsweise erfolgt vor dem Schweißen und nach dem Schweißen eine Reinigung der Schweißflächen. Eine vorteilhafte Reinigung erfolgt mit Stahlstrahlung. Die Stahlstrahlung unterscheidet sich von der Sandstrahlung durch die Verwendung von Stahlpartikeln anstelle von Sand.

Beim Nachisolieren wird auf die abisolierten und gereinigten Rohrflächen und Verbindungsstellen vorzugsweise der gleiche oder ein ähnlicher Schichtenaufbau für eine Isolierung aufgebracht wie bei der Herstellung der Rohre. Der erfindungsgemäße Schichtenaufbau der Isolierung endet außen mit einem Kunststoffmantel. Dieser Kunststoffmantel wird jedoch vorzugsweise mit der beschriebenen Schrumpfmuffe hergestellt.
Die Schrumpfmuffe wird anschließend über die Abzweigung und über die Schweißstellen gezogen und unter Wärmeeinwirkung geschrumpft. Vorteilhaft ist, wenn die Schrumpfmuffe sich mit der Kunststoffisolierung überlappt. Das Überlappungsmaß beträgt vorzugsweise mindestens 10mm und vorzugsweise höchstens 50mm.

Die Schrumpfmuffen können einstückig sein oder aus einem oder mehreren Teilen zusammengesetzt werden.
Wahlweise können auch mehrere Schrumpfmuffen zu einer Gesamtschrumpfmuffe zusammengesetzt werden. Dabei ist vorzugsweise eine schlauchartige Schrumpfmuffe vorgesehen, die an der Erdgasleitung in Leitungslängsrichtung den gesamten Nachisolierungsbereich überdeckt. Vorzugsweise ist zusätzlich eine Überlappung der schlauchartigen Schrumpfmuffe mit der Kunststoffisolierung auf den-Rohren vorgesehen. Die Überlappung beträgt vorzugsweise mindestens 10mm und vorzugsweise höchstens 50mm.

Vorzugsweise findet eine Klebeverbindung zwischen der Schrumpfmuffe und der Erdgasleitung bzw. mit der Abzweigung statt. Der Kunststoff der Schrumpfmuffe kann so gewählt werden, daß ohne Hilfsmittel eine Klebefähigkeit, ggfs. erst nach Erwärmung eine Klebefähigkeit entwickelt.

Vorzugsweise ist die Schrumpfmuffe innenseitig mit einer Kleberschicht und mit einer Siliziumdioxidschicht oder Titandioxidschicht versehen. Es handelt sich um einen Schmelzkleber.

Die einstückige Ausbildung ist günstig für einen Neubau von Erdgasleitungen.

Bei nachträglichem Anbringen einer Abzweigung kann die Anbringung einer Schrumpfmuffe einfacher werden, wenn die Schrumpfmuffe aus einem oder mehreren Teilen um die Abzweigung herum zusammen gesetzt wird. Die Schrumpfmuffe kann an den Nahtstellen verschweißt oder verklebt oder auch mechanisch verbunden werden. Darüber hinaus ist es von Vorteil, eine Verklebung der Schrumpfmuffen oder von Schrumpfmuffenteilen mit dem Stahlleitungsrohr bzw. mit dessen Isolierung oder eine Verklebung mit der Abzweigung bzw. mit dessen Isolierung vorzusehen. Durch die Verklebung werden die Schrumpfmuffen schließend zur Anlage an die korrosionsgefährdeten Flächen des Leitungsrohres gebracht. Dadurch wird die Luft an den Flächen des Leitungsrohres verdrängt, von der die Korrosionsgefahr ausgeht.

Die Schrumpfmuffe besteht vorzugsweise aus Polyethylen (PE) und/oder Polypropylen (PP) oder einer Kunststoffmischung mit wesentlichen PE- und/oder PP-Mischungsanteilen. Das Polyethylen besitzt eine vorzugsweise eine Dichte von mindestens 0,926 Gramm pro Kubikzentimeter. Das gleiche gilt für die das Polypropylen.
Polyethylen hat in der Bundesrepublik Deutschland eine vorgeschriebene Mindestdicke von 1 mm im aufgeschrumpften Zustand und ist vorzugsweise an der Berührungsfläche mit dem Stahlrohr bzw. an der Berührungsfläche mit der Abzweigung verklebbar. In anderen Ländern finden sich andere Regelungen, denen die Dicke der Schrumpfmuffe angepaßt wird. Wo keine Regelung besteht, ist vorzugsweise eine Mindestdicke von 1 mm vorgesehen.

Die Klebefähigkeit kann sich auf Schrumpfmuffenteile beschränken. Wahlweise ist nur der mit dem Anschlußflansch bzw. Anschlußstutzen korrespondierende Schrumpfmuffenteil klebefähig.
Bei der Klebung kann ein zusätzlicher Kleber zum Einsatz kommen. Vorzugsweise ist die Schrumpfmuffe aber selbst klebend, insbesondere nach Erwärmung auf Schrumpftemperatur. Die Erwärmung erfolgt wahlweise mit Warmluft. Die Warmluft kann elektrisch oder durch Verbrennung oder mit einer anderen Heizeinreichtung erzeugt werden. Vorzugsweise wird eine offene Flamme an der Kunststoffisolierung vermieden. Die Erwärmung kann auch durch Strahlung oder durch Berührung mit anderen Heizmitteln erzeugt werden.

Es können auch Schrumpfmuffen mit Kaltktebefahigkeit eingesetzt werden. Dann fällt die Gefahr von Schäden aus übermäßiger Erwärmung weg.
Bei Kaltklebefähigkeit werden die Schrumpfmuffen vor dem Einsatz mit einer Trennfolie/Schutzfolie an den Klebeflächen versehen, die bei dem Einsatz entfernt wird.

Im übrigen ist beim Setzen der Schrumpfmuffen von Vorteil, wenn der Innenraum zwischen Schrumpfmuffen und Stahlrohr bzw. Abzweigung vor dem Schrumpf evakuiert und/oder während des Schrumpfes mit einem Gas inertisiert wird.

Bevorzugtes Inertisierungsmittel ist trockenes Stickstoffgas. Vorzugsweise wird die Luft mit dem Inertgas bzw. Schutzgas ausgespült.
Durch Evakuieren und/oder Spülen wird verhindert, daß die Schrumpfmuffe Korrosionspartner des Stahles einschließt. Korrosionsgefahr geht dabei besonders von Luft aus.
Zur Kontrolle ausreichender Spülung kann in das austretende Spülgas eine offene Flamme gehalten werden. Bei Erlöschen der Flamme kann von einer ausreichenden Spülung ausgegangen werden.

Wahlweise wird der oben beschriebene Spülvorgang mit der Erwärmung der Schrumpfmuffe kombiniert. Dazu wird das Spülgas vor dem Eindringen auf die Schrumpftemperatur erwärmt. Das kann z.B. mit Hilfe eines geeigneten, beheizten Wärmetauschers erfolgen, durch den das Spülgas hindurchgeleitet wird. Die Beheizung des Wärmetauschers kann wie oben beschrieben erfolgen.

Günstig ist, wenn durch den Schrumpf der Schrumpfmuffe und wahlweise durch zusätzliches Andrücken der Schrumpfmuffen bzw. Schrumpfmuffenteile das eingeschlossene Gas ausgetrieben wird. Durch Evakuieren der Schrumpfmuffe bzw. durch Evakuieren des Zwischenraumes zwischen der Schrumpfmuffe und dem Leitungsrohr bzw. des Zwischenraumes zwischen der Schrumpfmuffe und der Abzweigung kann der aus anstehende Luftdruck zum Andrücken genutzt werden. Ein durch Unterdruck von 0,7 bis 0,9 bar entstehender äußerer Druck bewirkt eine sichere Anlage der Schrumpfmuffe an der Abzweigung.

Die Qualität und Wirtschaftlichkeit bestimmen die Nachisolierung. In dem Rahmen sind Dichte und Erweichungspunkt des gewählten PE- oder PP der Stahlrohrisolierung maßgebend. Das gleiche gilt für die Aushärtungstemperatur und Aushärtungszeit des ausgewählten EP(Epoxyharz)-Pulvers in der Anwendung. Die Qualität des EP-Pulvers in der Glasübergangstemperatur ist für den vorgesehenen Einsatz entscheidend bzw. bestimmt den Unterrostungsweg an Schnitt- oder Verletzungskanten im EP und den damit verbundenen Widerstand gegen Streuströme und den Boden-Chemie-Angriff.
Als besonders günstig haben sich EP-Pulver mit einem Aushärtungsbereich von 130 bis 200 Grad Celsius, vorzugsweise 160 bis 180 Grad Celsius, erwiesen. Die Aushärtungszeit verringert sich mit zunehmender Aushärtungstemperatur. Mit abnehmender Aushärtungstemperatur verlängert sich die notwendige Aushärtungszeit.

Die Qualität der Nachisolierung bestimmt die Nutzungszeit des gesamten Rohrsystems.

Im übrigen ist es günstig, wenn Rohre mit einer Kunststoff-Außenschicht mit oxidationshernmenden Stabilisatoren und mit einem Rußanteil verwendet werden. Die Isolierung dieser Rohre ist in sehr viel größerem Umfang UV-beständig, so daß übliche längere Lagerungen der Rohre der Isolierung wesentlich weniger schaden.

Die Kleberschicht hat vorzugsweise eine Schichtdicke von 0,15 bis 0,25 mm.
Das gilt sowohl für die Rohrherstellung als auch für die Nachisolierung mit einer Schrumpfmuffe. Bei der Schrumpfmuffe wird die Kleberschicht auf die Innenseite der Schrumpfmuffe aufgetragen und durch Wärmezuführung aktiviert.
Die Wärmezuführung kann von außen und/oder von innen erfolgen, bevorzugt mit Warmluft bzw. erwärmtem Inertgas oder durch elektrische Beheizung. Durch die Erwärmung wird der Schmelzkleber plastifiziert und entwickelt der Schmelzkleber seine Haftwirkung.

Aus dem Gesamtsystem ergibt sich die Dichtungswirkung der Isolierung gegen
Wasser, Sauerstoff und Kohlendioxid sowie gegen
Mechanische Belastungen aus Erdbewegungen, Grundwasser und Verkehrslasten und

Bemerkenswert ist der hohe Widerstand gegen Streuströme im Erdreich.
Die vorgeschlagenen Siliziumdioxidschichten und Titandioxidschichten bewirken ein hohes Dielektrikum.

In der Zeichnung ist ein Ausführungsbeispiel der Erfindung dargestellt.

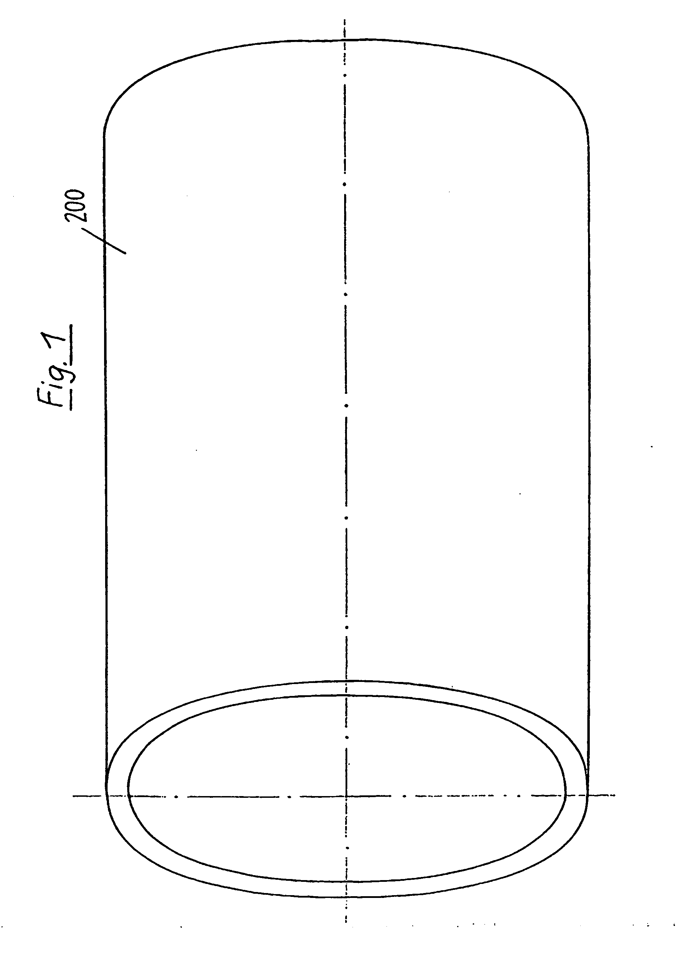

Fig. 1 zeigt im Ausschnitt eine Erdgasleitung 200 aus Stahlrohr mit einer Kunststoffisolierung.

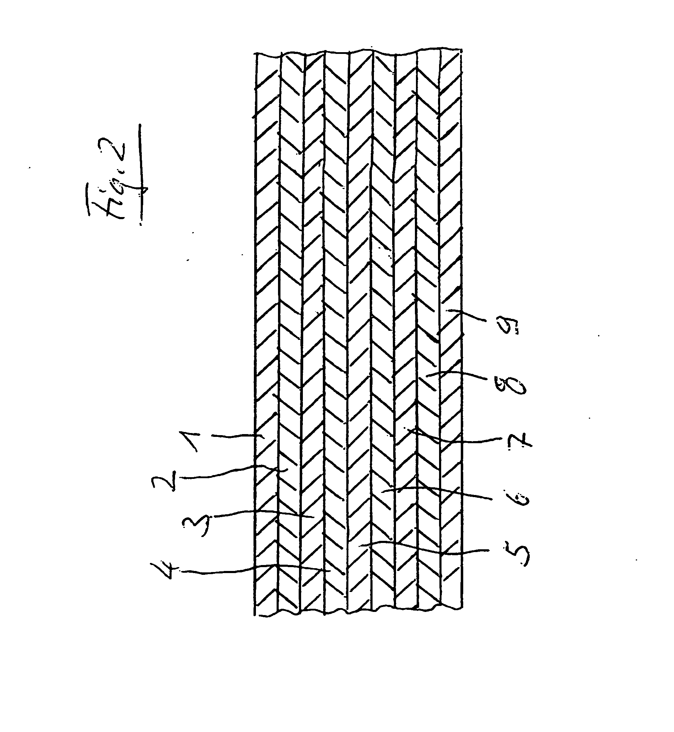

Fig. 2 zeigt einen Schichtenaufbau der Isolierung auf dem Stahlrohr, wobei Silizizumdioxid und/oder Titandioxid optional an verschiedenen Stellen vorgesehen sind.
Dabei ist mit 9 die Wandung des Stahlrohres bezeichnet, mit 8 eine unmittelbare Schicht aus Siliziumdioxid auf dem Stahlrohr, mit 7 eine Schicht aus einer Mischung von Siliziumdioxid und EP, mit 6 die übliche EP-Schicht, mit 5 eine Siliziumdioxidschicht, mit 4 ist eine Schicht aus einer Mischung von Kleber und Siliziumdioxid, mit 3 eine herkömmliche Kleberschicht, mit 2 eine Schicht aus Siliziumdioxid und mit 1 eine herkömmliche PE-Schicht.

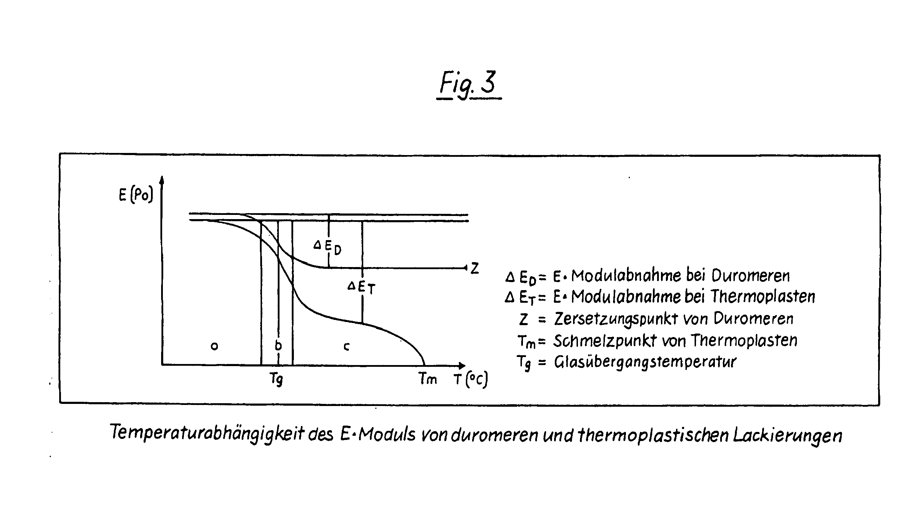

Die Glasübergangstemperatur ist in der Fig.3 anhand von Thermoplasten und Duromeren dargestellt. Die Temperaturabhängigkeit ist anhand der Änderungen des E-Moduls mit zunehmender bzw. abnehmender Temperatur dargestellt.
Der Glasübergangsbereich bildet sich im Bereich b aus.
Die Glasübergangstemperatur Tg liegt dort, wo die beiden Kurven sich im Bereich b am nächsten kommen.

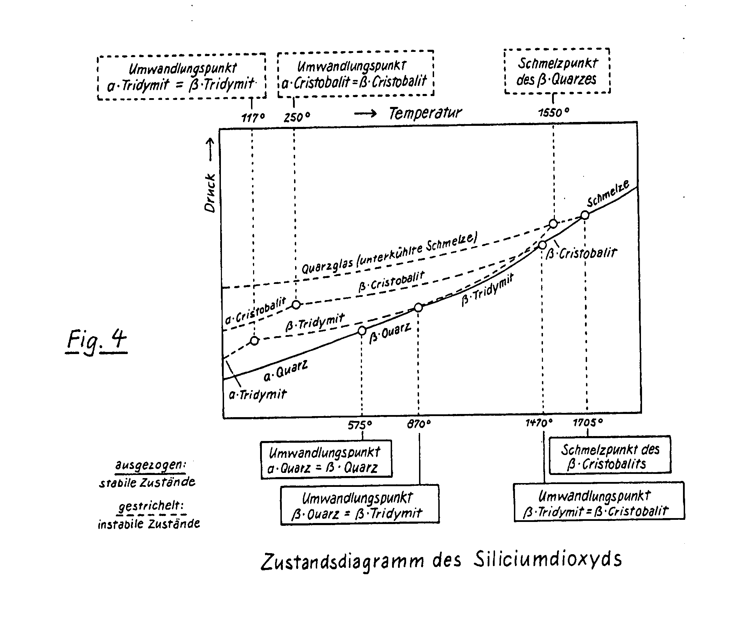

Fig. 4 zeigt ein Zustandsdiagramm des Siliziumdioxids.

Im übrigen ist es günstig, wenn Rohre mit einer PE-Außenschicht mit oxidatiorishemmenden Stabilisatoren und mit einem Rußanteil verwendet werden. Die Isolierung dieser Rohre ist in sehr viel größerem Umfang UV-beständig, so daß übliche längere Lagerungen der Rohre der Isolierung wesentlich weniger schaden.

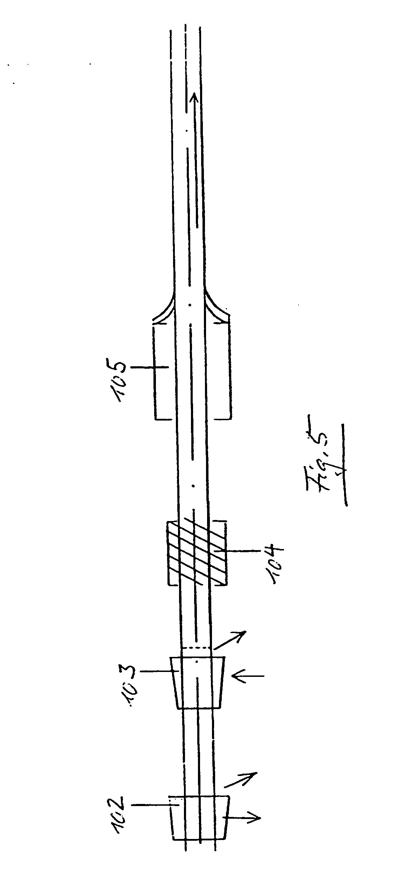

In der Fig. 5 ist ein Stahlrohr 101 dargestellt.

Das Stahlrohr 101 dreht sich während der nachfolgend beschriebenen Behandlung und wird zugleich in axialer-Richtreng bewegt. Das Stahlrohr 101 ist in einer nicht dargestellten Station mit Drahtkorn gestrahlt auf eine Oberfläclrenrauhigkeit von 0,05mm worden.

Das Rohr 101 bewegt sich durch eine ortsfeste Station 102, in der das Rohr 101 mit einer wässrigen Lösung von Kaliumpermanganat (KMnO₄) beaufschlagt wird. Der Anteil an Kaliumpermanganat beträgt 2,5Gew% von der Lösung. Das Rohr 102 und die Lösung sind so eingestellt, daß eine Berührungstemperatur von 50 bis 60 Grad Celsius besteht.
Dabei wird Öle und Fette, welche dem Rohr anhaften, oxidiert und mit der Lösung abgespült. Die ablaufende Lösung wird aufgefangen und im Kreis zurückgeführt. Der jeweils gewünschte Druck wird mit einer Pumpe erzeugt. Die Lösung wird bei der Rückführung gefiltert.

Unmittelbar nach Verlassen der Station 102 wird das Rohr 101 gebürstet.

In der Station 103 wird das Rohr mit einer Mischung aus Polyisbutylen und Siliziumidioxid in der Form von Tridymit beschichtet. Der Tridymit-Anteil in der Mischung beträgt im Ausführungsbeispiel 85Geb%. Die Beschichtung erfolgt im Ausführungsbeispiel durch Aufdrücken. Dazu wird das Rohr durch eine Ringdüse geführt. Die Ringdüse wird mit einer Druckpumpe gespeist In anderen Ausführungsbeispielen sind mehrere Druckpumpen gleichmäßig verteilt am Umfang der Ringdüse vorgesehen, um die Materialzuführung am Umfang der Ringdüse und am Umfang der Rohroberfläche zu vergleichmäßigen.
Im Ausführungsbeispiel ist die Ringdüse schwimmend auf dem Rohr angeordnett und im am Rohr geführt ist. Die Führung ist eine anstellbare Rollenführung mit drei gleichmäßig am Rohrumfang verteilten und einzeln anstellbaren Rollen vorgesehen. Die Rollen befinden sich in Bewegungsrichtung des Rohres vor der Ringdüse. Die Rollen werden mit Lagern gehalten, die in radialer Richtung des Rohres verstellbar am Gehäuse der Ringdüse verschraubt sind. In anderen Ausführungsbeispielen sind mehr Rollen vorgesehen und/oder sind Gleitführungen vorgesehen.
Die Materialzuführung von den Pumpen zur Ringdüse erfolgt mit flexiblen Druckleitungen, hier armierten Kunststoffleitungen. Die flexiblen Druckleitungen sollen verhindern, dass in unerwünschter Weise von außen Druck oder Zug auf die Ringdüse ausgeübt wird. In anderen Ausfiihnmgsbeispielen sind die Pumpen auf der Ringdüse montiert.

Die Ringdüse hat im übrigen die Form einer Ziehdüse. Das heißt die Düse erstreckt sich um einiges in Längsrichtigung des Rohres. Dabei verjüngt sich der Öffnungsspalt der Düse. Dadurch wird das Beschichtungsmaterial gepresst und werden die Siliziumdioxidpartikel gerichtet. Vorzugsweise werden pläuchellförmige Partikel verwendet.
In der Ziehdüse werden die plättchenförmige Partikel schuppenförmig Übereinander gedrückt. Dadurch entsteht eine vorteilhaft geschlossene Isolierugsschicht.

In anderen Ausführungsbeispielen wird das Beschichtungsmaterial aufgestrichen oder aufgespachtelt oder aufgewalzt. Dabei kann eine Drehung des Rohres bei gleicher Bewegung des Rohres in axialer Richtung von Vorteil sein.
Bei Drehung des Rohres kann das Beschichtungsmaterial ähnlich wie in einer
Verfahrensweise der Außenmantel aus PE um das sich drehende Rohr gewendelt werden. Für den Materialauftrag können die gleichen Werkzeuge wie für die zuvor beschriebene Herstellung des PE-Außenmantels Verwendung finden. Dabei kommen Extruder zum Einsatz. Die Extruder sollen dabei durch entsprechende Abmessungen der Schneckengänge und des Spieles im Extruder die plättclienförmigen Siliziumpartikel ohne wesentliche Zerstörung durchlassen.

In einer Station 104 findet eine induktive Erwärmung der Rohroberfläche auf 105 Grad Celsius statt, in anderen Ausführungsbeispielen auf 100 bis 110 Grad Celsius..
Dadurch verflüchtigt sich der niedrigmolekulargewichtige Polyisobutylen Anteil und verbleibt eine geschlossene Siliziumdioxidschicht.

In der Station 105 wird ein herkömmlicher Kleber aus einem Copolymer aufgetragen. Danach findet eine Beschichtung mit PE statt. Die Beschichtung härtet bei einer Temperatur von 165 bis 185 Grad Celsius statt

## Patentansprüche

1. Mehrschichtige Außenisolierung von Stahlrohren, insbesondere für Erdgasleitungen,
wobei thermoplastischer Kunststoff, bevorzugt Polyäthylen oder Polypropylen Verwendung findet, und
wobei unterhalb eines außen liegenden Kunststoffmantels eine Epoxidharz (EP) Schicht vorgesehen ist und
wobei ein Kleber zwischen dem außen liegenden Kunststoffmantel und der EP-Schicht vorgesehen ist,
**dadurch gekennzeichnet,**
**daß** oberhalb und/oder unterhalb der der EP-Schicht eine Schicht besteht, die ganz oder teilweise plättchenförmigem Siliziumdioxid und/oder Titandioxid besteht.

2. Isolierung nach Anspruch 1,
wobei vorzugsweise zwischen dem thermoplastischen Kunststoff und dem Stahlrohr mindestens noch eine EP-Schicht verwendet wird und vorzugsweise zwischen der EP-Schicht und dem thermoplastischen Kunststoff eine Kleberschicht verwendet wird,
wobei die Isolierung sich ganz oder teilweise über die Länge der Rohre erstreckt, insbesondere die Rohrenden frei von Isolierung sind,
vorzugsweise mit einem EP-Pulver mit
a) einer Aushärtungstemperatur von 130 bis 200 Grad Celsius, vorzugsweise 160 bis 180 Grad Celsius, beträgt, wobei die Temperatur um plus oder minus 10%, vorzugsweise um plus oder minus 5%, von der angegebenen Temperatur abweichen kann und/oder
b) einer Aushärtezeit von 2 bis 30 min, vorzugsweise 2 bis 5 min beträgt, wobei die Aushärtezeit um plus oder minus 10%, vorzugsweise um plus oder minus 5%, von der angegebenen Zeit abweichen kann und/oder
c) einer Glasübergangstemperatur 55 bis 90 Grad Celsius, wobei
die Temperatur um plus oder minus 10%, vorzugsweise um plus oder minus 5%, von der angegebenen Temperatur abweichen kann und/oder
wobei
die EP-Schicht und/oder die Kleberschicht und/oder das Material der Kunststoffummantelung einen Anteil an *Siliziumdioxid* und/oder Titandioxid besitzt
und/oder
unterhalb und/oder oberhalb der EP-Schicht eine geschlossene Schicht aus Siliziumdixoxid und/oder Titandioxid verwendet wird
und/oder
unterhalb und/oder oberhalb der Kleberschicht eine geschlossene Schicht aus Siliziumdioxid und/oder Titandioxid verwendet wird.

3. Isolierung nach Anspruch 1 oder 2, **dadurch gekennzeichnet, daß** das *Siliziumdioxid* in unterschiedlichen Zuständen verwendet wird.

4. Isolierung nach Anspruch 3, **dadurch gekennzeichnet, daß** das *Siliziumdioxid* in unterschiedlichen Zuständen aufgetragen wird oder nach dem Auftragen zu unterschiedlichen Reaktionen gebracht wird.

5. Isolierung nach Anspruch 5, **dadurch gekennzeichnet, daß** die unterschiedlichen Reaktionen durch Erwärmung erzwungen werden.

6. Isolierung nach einem der Ansprüche 1 bis 5, **dadurch gekennzeichnet, daß** in der *Siliziumdioxid*mischung Tridymit und/oder Cristobalit verwendet werden.

7. Isolierung nach Anspruch 6, **dadurch gekennzeichnet, daß** unterschiedliches *Siliziumdioxid* verwendet wird, wobei im Falle einer Erwärmung aus einem Tridymit-Bestandteil ab einer Umwandlungstemperatur von 117 Grad Celsius β-Tridymit und ab einer Umwandlungstemperatur von von 163 Grad Celsius γ-Tridymit entsteht und aus einem Cristobalit-Bestandteil ab einer Umwandlungstemperatur von 210 bis 250 Grad Celsius β-Cristobalit entsteht oder
wobei im Falle einer Abkühlung eine Umwandlung in umgekehrter Richtung erfolgt und/oder
daß Titandioxid in der Kristallform Rutil verwendet wird.

8. Isolierung nach einem der Ansprüche 1 bis 7, **dadurch gekennzeichnet, daß** *Siliziumdioxid* mit mindestens 10%, vorzugsweise mindestens 30% und noch weiter bevorzugt mit mindestens 50% und höchst bevorzugt mindestens 70% aus Tridymit und/oder Cristobalit verwendet wird.

9. Isolierung nach einem der Ansprüche 1 bis 8, **dadurch gekennzeichnet, daß** Tridymit mit einem Anteil von 95Vol% bis 99Vol% und das Cristobalit mit einem Anteil von 5Vol% bis 1 Vol%, bezogen auf die gesamte *Siliziumdioxid*menge verwendet wird.

10. Isolierung nach einem der Ansprüche 1 bis 9, **gekennzeichnet durch** die Verwendung von Siliziumdioxid und/oder Titandioxid in der Form von Plättchen.

11. Isolierung nach Anspruch 10, **dadurch gekennzeichnet, dass** die Plättchen in der Schicht schuppenförmig übereinander geschichtet werden.

12. Isolierung nach einem der Ansprüche 1 bis 11, **dadurch gekennzeichnet, daß** eine Schicht mit Siliziumdioxid und/oder Titandioxid mit einer Dicke von 0,005 bis 0,02 mm.

13. Isolierung nach einem der Ansprüche 1 bis 12, **dadurch gekennzeichnet, daß** die Schicht aus Siliziumdioxid und Titandioxid eine Restmenge aus einem Kleber verwendet wird.

14. Isolierung nach Anspruch 13, **dadurch gekennzeichnet, daß** der Kleber unter Wärmeeinwirkung ganz oder teilweise verflüchtig wirdt.

15. Isolierung nach Anspruch 13 oder 14, **dadurch gekennzeichnet, daß** als Restmenge Isobutylen, vorzugsweise Polyisobutylen, verwendet wird.

16. Isolierung nach einem der Ansprüche 13 bis 15, **dadurch gekennzeichnet, dass** eine Isobutylenmenge verwendet wird, die sich aus niedrigmolekulargewichtigen Produkten, die sich unter Wärmeeinwirkung verflüchtigen, und aus höhermolekulargewichten, klebrigen, verbleibenden Produkten zusammensetzt.

17. Isolierung nach Anspruch 16, **gekennzeichnet durch** Verwendung eines Restmengen-Anteils von 75 bis 95Gew% niedrigmolekulargewichtigen Polyisobutylen und eines Restmengen-Anteils von 2,5 bis 7,5Gew% an mittelmolekulargewichtigem Polyisobutylen.

18. Isolierung nach einem der Ansprüche 12 bis 17, **gekennzeichnet durch** die Zumischung von Paraffin und/oder Kolophonium und/oder Balsamharz als Kleber.

19. Isolierung nach einem der Anspräche 12 bis 18, **gekennzeichnet durch** Verwendung eines klebrigen Anteil in der Restmenge bis 10Gew%, vorzugsweise bis 15Gew% und noch weiter bevorzugt bis 20Gew%.

20. Isolierung nach Anspruch 12 bis 19, **dadurch gekennzeichnet, daß** ein Anteil von Paraffin an der Restmenge 2,5 bis 7,5Gew% und/oder der Anteil an Kolophonium oder Balsamharz 2,5 bis 17,5Gew% verwendet wird.

21. Isolierung nach einem der Ansprüche 1 bis 20, **dadurch gekennzeichnet, daß** eine Menge aus *Siliziumdioxid* und Titandioxid in der Isolierung mit mindestens 1 Gew%, vorzugsweise mindestens 5 Gew% und noch weiter bevorzugt mindestens 7,5Gew% verwendet wird, bezogen auf die Menge aus EP und *Siliziumdioxid.*

22. Isolierung nach einem der Ansprüche 1 bis 21, **dadurch gekennzeichnet, daß** eine Menge an Titandioxid von höchstens 50Vol%, vorzugsweise höchstens 35Vol% verwendet wird, bezogen auf die Menge aus *Siliziumdioxid* und Titandioxid.

23. Isolierung nach einem der Ansprüche 1 bis 22, **dadurch gekennzeichnet, daß** eine Menge an Titandioxid von mindestens 10 Vol%, vorzugsweise mindestens 20 Vol% verwendet wird, bezogen auf die Menge aus *Siliziumdioxid* und Titandioxid.

24. Isolierung nach einem der Ansprüche 1 bis 23, **dadurch gekennzeichnet, daß** das *Siliziumdioxid* als Pulver mit einer Korngröße von 0,005 bis 0,03 mm verwendet wird, vorzugsweise in Mischungen mit unterschiedlichen Kornbändern, wobei der eine Mischungsanteil Korngrößen von 0,005 bis 0,015 mm und der andere Mischungsanteil Korngrößen von 0,015 bis 0,03 mm besitzt.

25. Isolierung nach einem der Ansprüche 1 bis 24, **dadurch gekennzeichnet, daß** eine *Siliziumdioxid*-Schicht oder Titandioxidschicht zwischen der EP-Schicht und der Stahlrohroberfläche und/oder zwischen der Kunststoffummantelung und der Kleberschicht und/oder zwischen der Kleberschicht und der EP-Schicht verwendet wird oder daß anstelle der EP-Schicht eine
*Siliziumdioxid*-Schicht und/oder eine Titandioxidschicht verwendet wird.

26. Isolierung nach einem der Ansprüche 1 bis 25, **dadurch gekennzeichnet, daß** das *Siliziumdioxid* nach dem Aushärten der EP-Schicht den Zustand durch Wärmeaufnahme ändert.

27. Isolierung nach einem der Ansprüche 1 bis 26, **gekennzeichnet durch** Verwendung einer Siliziumschicht und/oder Titandioxidschicht zur Verringerung der Elektrokorrision des Stahles im Erdreich **durch** Aufnahme der elektrischen Ladungen im Erdreich.

28. Isolierung nach einem der Ansprüche 1 bis 27, **dadurch gekennzeichnet, daß** das EP und/oder das Siliziumdioxid undloder das Titandioxid pulverförmig undloder zusammen mit einer flüssigen oder pastenförmigen oder trockenen Haftvermittler auf die Beschichtungsfläche aufgebracht wird

29. Isolierung nach einem der Ansprüche 1 bis 28, **dadurch gekennzeichnet, daß** das EP und/oder das Siliziumdioxid und/oder das Titandioxid aufgeblasen und/oder aufgestreut und/oder gegen das Rohr geschleudert wird und an der Stahlrohroberfläche verklebt wird und/oder auf das Rohr gestrichen und/oder auf das Rohr gewalzt wird und/oder auf das Rohr gedrückt wird.

30. Isolierung nach Anspruch 29, **dadurch gekennzeichnet, dass** das EP und/oder das Siliziumoxid und/oder das Titandioxid aufgepumpt oder aufextrudiert wird

31. Isolierung nach Anspruch 30, **dadurch gekennzeichnet, dass** das EP und/oder das Siliziumdioxdid und/oder das Titandioxid bei sich drehendem Rohr und zugleich in axialer Richtung bewegten Rohr aus einer stationär angeordneten Pumpe oder Extruder aufgetragen wird.

32. Isolierung nach einem der Ansprüche 28 bis 31, **dadurch gekennzeichnet, dass** das EP und/oder das Siliziumdioxid und/oder das Titandioxid mittels einer Ringdüse aufgetragen wird.

33. Isolierung nach Anspruch 32, **dadurch gekennzeichnet, dass** das die Ringdüse schwimmend auf der dem Rohr angeordnet und an dem Rohr geführt wird.

34. Isolierung nach Anspruch 33, **dadurch gekennzeichnet, dass** die Ringdüse über flexible Zuleitungen gespeist wird.

35. Isolierung nach Anspruch 33 oder 34, **dadurch gekennzeichnet, dass** der notwendige Druck in der Düse
a) durch mindestens eine auf die Düse aufgesetzte Pumpe und/oder einen auf die Düse aufgesetzten Extruder aufgebaut wird oder
b) durch mindestens eine in der flexiblen Leitung oder am Ende der flexiblen Leitung angeordnete Pumpe oder Extruder aufgebaut wird

36. Isolierung nach einem der Ansprüche 32 bis 35, **dadurch gekennzeichnet, dass** die Düse mit einer verstellbaren Führung auf dem Rohr gehalten und zentriert wird, so dass eine gleichmäßige Schichtdicke entsteht.

37. Isolierung nach Anspruch 36, **dadurch gekennzeichnet, dass** die Führung in Bewegungsrichtung des Rohres vor der Düse auf dem Rohr angeordnet wird.

38. Isolierung nach Anspruch 36 oder 37, **dadurch gekennzeichnet, dass** für die Führung eine Rollenführung oder eine Gleitführung und/oder eine in radialer Richtung zum Rohr verstellbare Führung verwendet wird und durch Verstellung eine mit dem Rohr fluchtende Stellung der Düse herbeigeführt wird.

39. Isolierung nach einem der Ansprüche 32 bis 38, **dadurch gekennzeichnet, dass** die Ringdüse an mehreren am Umfang verteilten Stellen gespeist wird

40. Isolierung nach einem der Ansprüche 28 bis 39, **dadurch gekennzeichnet, dass** das EP und/oder Siliziumdioxid und/oder Titandioxid mit einer Ziehdüse auf der Rohroberfläche verteilt und/*oder angedrückt wird.*

41. Isolierung nach Anspruch 40, **dadurch gekennzeichnet, dass** eine mit der Ringdüse einstückige oder verbundene Ziehdüse verwendet wird.

42. Isolierung nach einem der Ansprüche 1 bis 41, **dadurch gekennzeichnet, daß**
a) das Stahlrohr und das EP und/oder das *Siliziumdioxid* mit unterschiedlichen elektrischen Ladungen versehen werden, so daß das EP und/oder das *Siliziumdioxid* und/oder Titandioxid aufgrund der Ladungskräfte an der Stahlrohroberfläche haften und/oder
b) die EP-Schicht und *das Siliziumdioxid* und das Titandioxid mit unterschiedlichen elektrischen Ladungen versehen werden, so daß das *Siliziumdioxid* und das Titandioxid aufgrund der Ladungskräfte an der EP-Schicht haftet oder umgekehrt und/oder
c) die Kleberschicht und das *Siliziumdioxid* und/oder das Titandioxid mit unterschiedlichen elektrischen Ladungen versehen werden, so daß das *Siliziumdioxid* aufgrund der Ladungskräfte an der Kleberschicht haftet oder umgekehrt

43. Isolierung nach einem der Ansprüche I bis 42, **dadurch gekennzeichnet, daß** die EP-Schicht und/oder die *Siliziumidioxidsschicht* und/oder die Titanidoxidschicht als Dünnschicht ausgeführt werden.

44. Isolierung nach einem der Ansprüche 1 bis 43, **dadurch gekennzeichnet, daß** die Stahlrohroberfläche durch Stahlstrahlen auf eine Rauhigkeitstiefe gebracht wird, daß pulverförmiges EP oder pulverförmiges *Siliziumdioxid an* der Oberfläche haften.

45. Isolierung nach Anspruch 44, **dadurch gekennzeichnet, daß** eine Rauhigkeitstiefe 0,005 bis 0,5mm.

46. Isolierung nach einem der Ansprüche 1 bis 45, **dadurch gekennzeichnet, daß** die Beschichtungsfläche erwärmt wird und/oder erwärmtes Pulver aufgetragen wird und/oder daß das Pulver mit einem erwärmten Trägermittel aufgetragen wird.

47. Isolierung nach Anspruch 46, **dadurch gekennzeichnet, daß** das Pulver bei Verwendung von EP eine Vorwärmtemperatur hat, die unterhalb der Reaktionstemperatur des EP liegt.

48. Isolierung nach einem der Ansprüche 1 bis 47, **dadurch gekennzeichnet, daß** getrocknetes *Siliziumdioxid* und/oder Titandioxid verwendet wird.

49. Isolierung nach Anspruch 48, **dadurch gekennzeichnet, daß** das *Siliziumdioxid* und/oder Titandioxid so weit getrocknet wird, daß der Schrumpf der Schicht aus *Siliziumdioxid* und Titandioxid durch dessen Volumensvergrößerung kompensiert wird, wobei die Trocknung vorzugsweise durch Erwärmung auf mindestens 117 Grad Celsius unmittelbar vor und bei dem Auftragen der Schicht erfolgt..

50. Isolierung nach einem der Ansprüche 1 bis 49, **gekennzeichnet durch** einen mechanischen Auftrag der Beschichtungsmittel, insbesondere **durch** Verwendung von Trägergas zum Aufblasen von Beschichtungsmittel oder **durch** Verwendung von Schleuderrädern pulverförmiger Beschichtungsmittel.

51. Isolierung nach einem der Ansprüche 1 bis 50, **dadurch gekennzeichnet, daß** die Kleberschicht mit einer Eigentemperatur von mindestens 150 Grad Celsius und/oder die PE-Schicht mit mindestens einer Eigentemperatur von 165 Grad Celsius aufgetragen wird.

52. Isolierung nach einem der Ansprüche 1 bis 51, **gekennzeichnet durch** eine Aushärtetemperatur von mindestens 130 Grad Celsius bei einer Härtezeit von höchstens 15min, vorzugsweise **durch** eine Aushärtetemperatur von mindestens 150 Grad Celsius bei einer Härtezeit von höchstens 10min und noch weiter bevorzugt **durch** eine Aushärtetemperatur von mindestens 180 Grad Celsius bei einer Härtezeit von höchstens 5min für die Nachisolierung.

53. Isolierung nach einem der Ansprüche 1 bis 52, **gekennzeichnet durch** Verwendung von EP-Pulver mit einer Korngröße kleiner 0,3 mm, vorzugsweise einer Korngröße kleiner 0,1 mm und noch weiter bevorzugt einer minimalen Korngröße von 0,05 mm.

54. Isolierung nach einem der Ansprüche 1 bis 53, **gekennzeichnet durch** Verwendung von *Siliziumdioxidpulver* mit einer Korngröße kleiner 0,02 mm, vorzugsweise einer Korngröße bis 0,01mm, noch weiter bevorzugt einer minimalen Korngröße von 0,005mm.

55. Isolierung nach einem der Ansprüche 11 bis 54, **dadurch gekennzeichnet, daß** dem Siliziumdioxid und/oder Titandioxid ein Schmelzkleber zugemischt wird

56. Isolierung nach einem der Ansprüche 1 bis 55, **dadurch gekennzeichnet, daß** dem Siliziumdioxid und/oder Titandioxid ein Polyisobutylen-Gemisch zugemischt ist.

57. Isolierung nach Anspruch 56, **dadurch gekennzeichnet, daß** ein Polyisobutylen-Gemisch aus einem niedrigmolekulargewichtigen Polyisobutylen verwendet wird, das sich unter Wärmeeinwirkung verflüchtigt und einem höhermolekulargewichtigen, klebrigen Polyisobuytlen besteht, das bei der Wärmeeinwirkung zumindest teilweise verbleibt.

58. Isolierung nach einem der Ansprüche 1 bis 57, **dadurch gekennzeichnet, daß** ein klebriges Balsamharz oder klebriges Kolophonium zugemischt wird.

59. Isolierung nach einem der Ansprüche 1 bis 58, **dadurch gekennzeichnet, dass** ein Anteil von Polyisobutylen bis 50 Gew%, vorzugsweise bis 30Gew%, noch weiter bevorzugt bis 20 Gew% und höchst bevorzugt bis 10 Gew%, bezogen auf die Siliziumdioxid- und Titandioxidschicht, verwendet wirdt.

60. Isolierung nach Anspruch 40, **dadurch gekennzeichnet, daß** ein Anteil von Balsamharz bzw. Kolophonium bis 30 Gew% vorzugsweise bis 20 Gew% verwendet wird, bezogen auf die nach Abzug der Siliziumdioxidmenge und Titandioxidmenge verbleibenden Restmenge der Schichtt.

61. Isolierung nach einem der Ansprüche 1 bis 60, **dadurch gekennzeichnet, daß** die Schicht nach dem Auftragen auf 100 bis 110 Grad Celsius erwärmt wird.

62. Isolierung nach einem der Ansprüche 1 bis 61, **dadurch gekennzeichnet, daß** eine induktive Erwärmung der Rohroberfläche erfolgt.

## Claims

1. Multi-layer external insulation of steel pipes, especially for natural gas pipelines,
wherein a thermoplastic plastic, preferably polyethylene or polypropylene is used, and
wherein an epoxy resin (EP) layer is provided underneath an externally located plastic material,
**characterised in that**,
above and/or below the EP layer is a layer that consists wholly or partially of lamellar silicon dioxide and/or titanium dioxide.

2. Insulation according to Claim 1, wherein at least one other EP layer is preferably used between the thermoplastic plastic and the steel tube and an adhesive layer is preferably used between the EP layer and the thermoplastic plastic, wherein the insulation extends completely or partially over the length of the pipe, the pipe ends in particular being free of insulation,
preferably with an EP powder with
a) a curing temperature of 130 to 200 °C, preferably 160 to 180 °C, wherein the temperature can deviate by plus or minus 10%, preferably by plus or minus 5% from the stated temperature and/or
b) a curing time of 2 to 30 minutes, preferably 2 to 5 minutes, wherein the curing time can deviate by plus or minus 10%, preferably by plus or minus 5% from the stated time and/or
c) a glass transition temperature of 55 to 90°C, wherein the temperature can deviate by plus or minus 10%, preferably by plus or minus 5% from the stated temperature and/or
wherein
the EP layer and/or the adhesive layer and/or the material of the plastic sheathing has a proportion of silicon dioxide and/or titanium dioxide
and/or
a continuous layer of silicon dioxide and/or titanium dioxide is used below and/or above the EP layer
and/or
a continuous layer of silicon dioxide and/or titanium dioxide is used below and/or above the adhesive layer.

3. Insulation according to Claim 1 or 2, **characterised in that** the silicon dioxide is used in different states.

4. Insulation according to Claim 3, **characterised in that** the silicon dioxide is applied in different states or after application is subjected to various reactions.

5. Insulation according to Claim 5, **characterised in that** the various reactions are the result of heating.

6. Insulation according to one of Claims 1 to 5, **characterised in that** tridymite and/or cristobalite are used in the silicon dioxide mixture.

7. Insulation according to Claim 6, **characterised in that** a different silicon dioxide is used, wherein β-tridymite is formed from a tridymite component as of a transition temperature of 117 °C and γ-tridymite is formed above a transition temperature of 163 °C and β-cristobalite is formed from a cristobalite component as of a transition temperature of 210 to 250 °C or
wherein in the case of cooling, a transition occurs in the opposite sense
and/or
that titanium dioxide is used in the crystal form, rutile.

8. Insulation according to one of Claims 1 to 7, **characterised in that** silicon dioxide is used containing at least 10%, preferably at least 30% and even more preferably at least 50% and most preferably at least 70% of tridymite and/or cristobalite.

9. Insulation according to one of Claims 1 to 8, **characterised in that** tridymite is used in an amount of 95 vol. % to 99 vol. % and cristobalite is used in an amount of 5 vol. % to 1 vol. %, based on the total amount of silicon dioxide.

10. Insulation according to one of Claims 1 to 9, **characterised by** the use of silicon dioxide and/or titanium dioxide in the form of lamellae.

11. Insulation according to Claim 10, **characterised in that** the lamellae in the layer are imbricatedly layered above one another.

12. Insulation according to one of Claims 1 to 11, **characterised in that** a layer with silicon dioxide and/or titanium dioxide is 0.005 to 0.2 mm thick.

13. Insulation according to one of Claims 1 to 12, **characterised in that** a residual quantity of an adhesive is used in the layer of silicon dioxide and/or titanium dioxide.

14. Insulation according to Claim 13, **characterised in that** the adhesive is completely or partially volatilised by the effect of heat.

15. Insulation according to Claim 13 or 14, **characterised in that** isobutylene, preferably polyisobutylene, is used as the residual quantity.

16. Insulation according to one of Claims 13 to 15, **characterised in that** a quantity of isobutylene is used, which is composed of low molecular weight products that volatilise when heated, and of higher molecular weight, tacky, residual products.

17. Insulation according to Claim 16, **characterised by** the use of a proportion of a residual quantity of 75 to 95 wt.% low molecular weight polyisobutylene and a proportion of a residual quantity of 2.5 to 7.5 wt.% of a medium molecular weight polyisobutylene.

18. Insulation according to one of Claims 12 to 17, **characterised by** the admixture of paraffin and/or rosin and/or balsamic resin as the adhesive.

19. Insulation according to one of Claims 12 to 18, **characterised by** the use of a tackifying portion in the residual quantity up to 10 wt.%, preferably up to 15 wt.% and even more preferably up to 20 wt.%.

20. Insulation according to Claims 12 to 19, **characterised in that** a portion of paraffin is used in the residual amount of 2.5 to 7.5 wt.% and/or the portion of rosin or balsamic resin is up to 17.5 wt.%.

21. Insulation according to one of Claims 1 to 20, **characterised in that** the quantity of silicon dioxide and titanium dioxide used in the insulation is at least 1 wt.%, preferably at least 5 wt.% and even more preferably at least 7.5 wt.%, based on the quantity of EP and silicon dioxide.

22. Insulation according to one of Claims 1 to 21, **characterised in that** a quantity of titanium dioxide of up to 50 vol.% is used, based on the quantity of silicon dioxide and titanium dioxide.

23. Insulation according to one of Claims 1 to 22, **characterised in that** a quantity of titanium dioxide of up to at least 10 vol.%, preferably at least 20 vol.% is used, based on the quantity of silicon dioxide and titanium dioxide.

24. Insulation according to one of Claims 1 to 23, **characterised in that** the silicon dioxide is used as a powder with a particle size of 0.005 to 0.03 mm, preferably in mixtures of various particle size ranges, wherein one part of the mixture has particle sizes of 0.005 to 0.015 mm and the other part of the mixture has particle sizes of 0.015 to 0.03 mm.

25. Insulation according to one of Claims 1 to 24, **characterised in that** a silicon dioxide layer or titanium dioxide layer is used between the EP layer and the steel pipe surface and/or between the plastic sheathing and the adhesive layer and/or between the adhesive layer and the EP layer or that a silicon dioxide layer and/or a titanium dioxide layer is used instead of the EP layer.

26. Insulation according to one of Claims 1 to 25, **characterised in that** the silicon dioxide changes its state due to heat uptake after curing of the EP layer.

27. Insulation according to one of Claims 1 to 26, **characterised by** the use of a silicon layer and/or titanium dioxide layer to reduce the electro-corrosion of the steel in the ground by taking up the electrical charge in the ground.

28. Insulation according to one of Claims 1 to 27, **characterised in that** the EP layer and/or the silicon dioxide and/or the titanium dioxide is applied in powder form and/or together with a liquid or pasty or dry bonding agent onto the coating surface.

29. Insulation according to one of Claims 1 to 28, **characterised in that** the EP and/or the silicon dioxide and/or the titanium dioxide is blown onto and/or scattered and/or dashed against the pipe and is adhered to and/or is coated and/or is rolled onto the pipe and/or is pressed onto the pipe.

30. Insulation according to Claim 29, **characterised in that** the EP and/or the silicon oxide and/or the titanium dioxide is pumped on or extruded on.

31. Insulation according to Claim 30, **characterised in that** the EP and/or the silicon dioxide and/or the titanium dioxide is applied from a stationary pump or extruder onto a pipe that is rotating about itself and simultaneously moved in the axial direction

32. Insulation according to one of Claims 28 to 31, **characterised in that** the EP and/or the silicon dioxide and/or the titanium dioxide is applied by means of a tubular die.

33. Insulation according to Claim 32, **characterised in that** the tubular die is placed close to the pipe and moved to the pipe.

34. Insulation according to Claim 33, **characterised in that** the tubular die is fed through flexible feed lines.

35. Insulation according to Claim 33 or 34, **characterised in that** the required pressure in the die
a) is built up by at least one pump attached to the die and/or an extruder attached to the die or
b) is built up by at least one pump or extruder located in the flexible feed line or at the end of the flexible feed line.

36. Insulation according to one of Claims 32 to 35, **characterised in that** the die is held to the pipe by means of an adjustable drive and centred such that a constant layer thickness is obtained.

37. Insulation according to Claim 36, **characterised in that** the drive is arranged in the direction of movement of the pipe in front of the die on the pipe.

38. Insulation according to Claim 36 or 37, **characterised in that** a roller drive or a sliding drive and/or a drive that can be adjusted in the radial direction to the pipe is used for the drive and by displacement enables the die to be aligned with the pipe.

39. Insulation according to one of Claims 32 to 38, **characterised in that** the tubular die is fed at a plurality of points distributed on the circumference.

40. Insulation according to one of Claims 28 to 39, **characterised in that** the EP and/or the silicon dioxide and/or the titanium dioxide is dispersed and/or pressed on the pipe surface with an extrusion die.

41. Insulation according to Claim 40, **characterised in that** an extrusion die is used, which is an integral part of, or is connected to the tubular die.

42. Insulation according to one of Claims 1 to 41, **characterised in that**
a) the steel pipe and the EP and/or the silicon dioxide are provided with different electrical charges, such that the EP and/or the silicon dioxide and/or titanium dioxide adhere to the steel surface because of the electrical forces and/or
b) the EP layer and the silicon dioxide and the titanium dioxide are provided with different electrical charges, such that the silicon dioxide and the titanium dioxide adhere to the EP layer, or vice versa, because of the electrical forces and/or
c) the adhesive layer and the silicon dioxide and/or the titanium dioxide are provided with different electrical charges, such that the silicon dioxide adheres to the adhesive layer, or vice versa, because of the electrical forces

43. Insulation according to one of Claims 1 to 42, **characterised in that** the EP layer and/or the silicon dioxide layer and/or the titanium dioxide layer are made as a thin layer.

44. Insulation according to one of Claims 1 to 43, **characterised in that** the surface of the steel pipe is brought to a degree of rugosity by steel blasting such that powdered EP or powdered silicon dioxide adhere to the surface.

45. Insulation according to Claim 44, **characterised in that** a degree of rugosity of 0.005 to 0.5 mm.

46. insulation according to one of Claims 1 to 45, **characterised in that** the coating area is heated and/or heat powder is applied and/or that the powder is applied with a heated carrier.

47. Insulation according to Claim 46, **characterised in that** the powder, when EP is used, has a preheat temperature that is below the reaction temperature of the EP.

48. Insulation according to one of Claims 1 to 47, **characterised in that** dried silicon dioxide and/or titanium dioxide are used.

49. Insulation according to Claim 48, **characterised in that** the silicon dioxide and/or titanium dioxide are dried so far that the shrink back of the layer of silicon dioxide and titanium dioxide is compensated by its increase in volume, wherein the drying is carried out preferably by heating to at least 117°C immediately prior to and during the application of the layer.

50. Insulation according to one of Claims 1 to 49, **characterised by** a mechanical application of the coating agent, in particular by the use of a carrier gas to project the coating agent or by the use of centrifugal wheels for the powdered coating agent.

51. Insulation according to one of Claims 1 to 50, **characterised in that** the adhesive layer is applied with an inherent temperature of at least 150 °C and/or the PE layer is applied with an inherent temperature of at least 165°C.

52. Insulation according to one of Claims 1 to 51, **characterised by** a curing temperature of at least 130 °C for a curing time of maximum 15 minutes, preferably by a curing temperature of at least 150 °C for a curing time of maximum 10 minutes and even more preferably by a curing temperature of at least 180 °C for a curing time of maximum 5 minutes for the subsequent insulation.

53. Insulation according to one of Claims 1 to 52, **characterised by** the use of EP powder with a particle size less than 0.3 mm, preferably a particle size less than 0.1 mm and even more preferably a minimum particle size of 0.05 mm.

54. Insulation according to one of Claims 1 to 53, **characterised by** the use of silicon dioxide powder with a particle size less than 0.02 mm, preferably a particle size up to 0.01 mm and even more preferably a minimum particle size of 0.005 mm.

55. Insulation according to one of Claims 11 to 54, **characterised in that** a hot melt adhesive is mixed with the silicon dioxide and/or titanium dioxide.

56. Insulation according to one of Claims 1 to 55, **characterised in that** a polyisobutylene mixture is mixed with the silicon dioxide and/or titanium dioxide.

57. Insulation according to Claim 56, **characterised in that** a polyisobutylene mixture is used consisting of a low molecular weight polyisobutylene that volatilises when heated and a higher molecular weight, tacky polyisobutylene that at least partially remains when heated.

58. Insulation according to one of Claims 1 to 57, **characterised in that** a tacky balsamic resin or a tacky rosin is blended in.

59. Insulation according to one of Claims 1 to 58, **characterised in that** polyisobutylene is used in a proportion of up to 50 wt.%, preferably up to 30 wt.%, even more preferably up to 20 wt.% and most preferably up to 10 wt.%, based on the silicon dioxide and titanium dioxide layer.

60. Insulation according to Claim 40, **characterised in that** balsamic resin or rosin is used in a proportion of up to 30 wt.%, preferably up to 20 wt.%, based on the residual amount of the layer after having removed the amounts of silicon dioxide and titanium dioxide.

61. Insulation according to one of Claims 1 to 60, **characterised in that** the layer, after application, is heated to 100 to 110 °C.

62. Insulation according to one of Claims 1 to 61, **characterised in that** the pipe surface is inductively heated.

## Revendications

1. Isolation extérieure en plusieurs couches de conduite en acier, en particulier pour des conduites de gaz naturel,
sachant qu'une matière synthétique thermoplastique, de préférence du polyéthylène ou du polypropylène, est utilisée, et
au-dessous d'une enveloppe de matière synthétique placée extérieurement est prévue une couche de résine époxy (EP), et
un indice est prévu entre l'enveloppe de matière synthétique, placée extérieurement, et la couche de EP,
**caractérisée par le fait**
**qu'**au-dessus et/ou au-dessous de la couche EP est prévue une couche composée en totalité ou en partie de dioxyde de silicium et/ou de dioxyde de titane, se présentant sous la forme de plaquettes.

2. Isolation selon la revendication 1,
sachant que, de préférence, entre la matière synthétique thermoplastique et la conduite en acier est utilisée encore une couche de EP et, de préférence, entre la couche de EP et la matière synthétique thermoplastique est utilisée une couche d'adhésif, l'isolation s'étendant sur la totalité ou une partie de la longueur des conduites, en particulier, les extrémités des conduites étant exemptes d'isolation,
de préférence avec une poudre de EP, présentant
a) une température de durcissement de 130 à 200 degrés Celsius, de préférence de 160 à 180 degrés Celsius, la température pouvant différer de plus ou moins 10 %, de préférence de plus ou moins 5 %, de la température indiquée, et/ou
b) un temps de durcissement de 2 à 30 minutes, de préférence de 2 à 5 minutes, étant prévu, le temps de durcissement pouvant différer de plus ou moins 10 %, de préférence de plus ou moins 5 %, du temps indiqué, et/ou
c) une température de transition vitreuse de 55 à 90 degrés Celsius, la température pouvant différer de plus ou moins 10 %, de préférence de plus ou moins 5 %, de la température indiquée, et/ou
la couche de EP et/ou la couche d'adhésif et/ou le matériau de l'enveloppement en matière synthétique comprend une certaine proportion de dioxyde de silicium et/ou de dioxyde de titane et/ou
au-dessus et/ou au-dessous de la couche de EP est utilisée une couche fermée de dioxyde de silicium et/ou de dioxyde de titane ;
au-dessus et/ou au-dessous de la couche d'adhésif est utilisée une couche fermée de dioxyde de silicium et/ou de dioxyde de titane.

3. Isolation selon la revendication 1 ou 2, **caractérisée en ce que** le dioxyde de silicium est utilisé en des états différents.

4. Isolation selon la revendication 3, **caractérisée en ce que** le dioxyde de silicium est appliqué en des états différents, ou est mis en des réactions différentes après application.

5. Isolation selon la revendication 4, **caractérisée en ce que** les différentes réactions sont forcées à se produire par chauffage.

6. Isolation selon l'une des revendications 1 à 5, **caractérisée en ce qu'**on utilise de la tridymite et/ou de la cristobalite dans le mélange de dioxyde de silicium.

7. Isolation selon la revendication 6, **caractérisée en ce qu'**on utilise un dioxyde de silicium différent, sachant que, dans le cas d'un chauffage, à partir d'un composant de tridymite, à partir d'une température de conversion de 117 degrés Celsius, il y a production de β-tridymite et, à partir d'une température de conversion de 163 degrés Celsius, il y a production de γ-tridymite et, à partir d'un composant de cristobalite, à partir d'une température de conversion de 210 à 250 degrés Celsius, il y a production de β-cristobalite ou,
dans le cas d'un refroidissement, s'effectue une conversion en sens inverse et/ou
**en ce qu'**on utilise du dioxyde de titane sous la forme cristalline de rutile.

8. Isolation selon l'une des revendications 1 à 7, **caractérisée en ce que** l'on utilise du dioxyde de silicium ayant une proportion d'au moins 10 %, de préférence d'au moins 30 %, et de façon encore préférée d'au moins 50 %, et de façon la mieux préférée d'au moins 70 %, en tridymite et/ou en cristobalite.

9. Isolation selon l'une des revendications 1 à 8, **caractérisée en ce que** l'on utilise de la tridymite ayant une proportion de 95 % en volume à 99 % en volume, et de la cristobalite avec une proportion de 5 % en volume à 1 % en volume, en se référant à la quantité totale de dioxyde de silicium.

10. Isolation selon l'une des revendications 1 à 9, **caractérisée par** l'utilisation de dioxyde de silicium et/ou de dioxyde de titane, se présentant sous la forme de plaquettes.

11. Isolation selon la revendication 10, **caractérisée en ce que** les plaquettes dans la couche sont superposées les unes au-dessus des autres en couches en forme d'écailles.

12. Isolation selon l'une des revendications 1 à 11, **caractérisée par** une couche de dioxyde de silicium et/ou de dioxyde de titane, d'une épaisseur de 0,005 à 0,02 mm.

13. Isolation selon des revendications 1 à 12, **caractérisée en ce que** la couche de dioxyde de silicium et de dioxyde de titane utilisée contient une quantité résiduelle d'adhésif.

14. Isolation selon la revendication 13, **caractérisée en ce que** l'adhésif est rendu, en totalité ou en partie, volatil sous l'effet de la chaleur.

15. Isolation selon la revendication 13 ou 14, **caractérisée en ce que** l'on utilise comme quantité résiduelle de l'isobutylène, de préférence du polyisobutylène.

16. Isolation selon l'une des revendications 13 à 15, **caractérisée en ce qu'**on utilise une quantité d'isobutylène composée de produits à faible poids moléculaire, qui s'évapore sous l'effet de la chaleur, et composée de produits à haut poids moléculaire, adhésifs, persistants.

17. Isolation selon la revendication 16, **caractérisée par** l'utilisation d'une proportion en quantité résiduelle de 75 à 95 % en polybutylène à faible poids moléculaire, et une proportion en quantité résiduelle de 2,5 à 7,5 % d'un polyisobutylène à poids moléculaire moyen.

18. Isolation selon l'une des revendications 12 à 17, **caractérisée par** l'addition en mélange de paraffine et/ou de colophane et/ou de résine balsamique en tant qu'adhésif.

19. Isolation selon l'une des revendications 12 à 18, **caractérisée par** l'utilisation d'une proportion collante dans la quantité résiduelle, jusqu'à 10 %, de préférence jusqu'à 15 % et, de façon encore mieux préférée, jusqu'à 20 %.

20. Isolation selon la revendication 12 à 19, **caractérisée en ce qu'**en ce qu'une proportion de paraffine sur la quantité résiduelle est de 2,5 à 7,5 % et/ou la proportion de colophane ou de résine balsamique est de 2,5 à 17,5 % en poids, est utilisée.

21. Isolation selon l'une des revendications 1 à 20, **caractérisée en ce qu'**une quantité de dioxyde de silicium et de dioxyde de titane dans l'isolation, avec au moins 1 % en poids, de préférence au moins 5 % en poids, et de façon encore mieux préférée d'au moins 7,5 % en poids, est utilisée, en se référant à la quantité de EP et de dioxyde de silicium.

22. Isolation selon l'une des revendications 1 à 21, **caractérisée en ce qu'**une quantité de dioxyde de titane maximale de 50 % en volume, de préférence maximale de 35 % en volume, est utilisée, en se référant à la quantité de dioxyde de silicium et de dioxyde de titane.

23. Isolation selon l'une des revendications 1 à 22, **caractérisée par** une quantité de dioxyde de titane d'au moins 10 % en volume, de préférence d'au moins 20 % en volume, est utilisée, en se référant à la quantité de *dioxyde de silicium* et de dioxyde de titane.

24. Isolation selon l'une des revendications 1 à 23, **caractérisée en ce que** le dioxyde de silicium est utilisé sous forme de poudre d'une taille de grain de 0,005 à 0,03 mm ; de préférence en des mélanges ayant des bandes de granulométrie différente, sachant qu'une proportion de mélange présente des tailles de grain de 0,005 à 0,015 mm et l'autre proportion de mélange présente des tailles de grain de 0,015 à 0,03 mm.

25. Isolation selon l'une des revendications 1 à 24, **caractérisée en ce qu'**une couche de dioxyde de silicium ou une couche de dioxyde de titane, au moyen de la couche de EP et de la surface du tube d'acier et/ou entre l'enveloppement en matière synthétique et la couche d'adhésif et/ou entre la couche d'adhésif et la couche EP, est utilisée,
ou **en ce que**, au lieu de la couche EP, on utilise une couche de dioxyde de silicium et/ou une couche de dioxyde de titane.

26. Isolation selon l'une des revendications 1 à 25, **caractérisée en ce que** le dioxyde de silicium, après durcissement de la couche de EP, change d'état par captation de chaleur.

27. Isolation selon l'une des revendications 1 à 26, **caractérisée par** l'utilisation d'une couche de silicium et/ou d'une couche de dioxyde de titane, pour diminuer l'électro-corrosion de l'acier dans le sol, par captation des charges électriques dans le sol.

28. Isolation selon l'une des revendications 1 à 27, **caractérisée en ce que** le EP et/ou le dioxyde de silicium et/ou le dioxyde de titane est/sont appliqué(s) sur la surface de revêtement de façon à l'état pulvérulent et/ou conjointement avec un produit d'adhésion liquide ou pâteux ou sec.

29. Isolation selon l'une des revendications 1 à 28, **caractérisé en ce que** le EP et/ou le dioxyde de silicium et/ou le dioxyde de titane est/sont soufflé(s) et/ou dispersé(s) et/ou éjecté(s) contre le tube, et/ou est/sont collé(s) sur la surface de la conduite d'acier, et/ou est/sont enduit(s) sur le tube et/ou appliqué(s) au rouleau sur le tube et/ou pressé(s) sur le tube.

30. Isolation selon la revendication 29, **caractérisée en ce que** le EP et/ou le dioxyde de silicium et/ou le dioxyde de titane sont appliqués par pompage ou par extrusion.

31. Isolation selon la revendication 30, **caractérisée en ce que** le EP et/ou le dioxyde de silicium et/ou le dioxyde de titane est/sont appliqué(s) lorsque le tube est en rotation et qu'en même temps le tube est déplacé dans la direction axiale, depuis une pompe stationnaire ou une extrudeuse.

32. Isolation selon l'une des revendications 28 à 31, **caractérisée en ce que** le EP et/ou le dioxyde de silicium et/ou le dioxyde de titane est/sont appliqués au moyen d'une buse annulaire.

33. Isolation selon la revendication 32, **caractérisée en ce que** la buse annulaire est disposée de façon flottante sur le tube et est guidée sur le tube.

34. Isolation selon la revendication 33, **caractérisée en ce que** la buse annulaire est alimentée par des lignes d'alimentation flexibles.

35. Isolation selon la revendication 33 ou 34, **caractérisée en ce que** la pression nécessaire, dans la buse,
a) est établie par au moins une pompe installée sur la buse et/ou une extrudeuse installée sur la buse
b) est établie par au moins une pompe ou une extrudeuse, disposée dans la conduite flexible et/ou à l'extrémité de la conduite flexible.

36. Isolation selon l'une des revendications 32 à 35, **caractérisée en ce que** la buse est maintenue avec un guidage manoeuvrable sur le tube et est centrée de manière à produire une épaisseur de couche régulière.

37. Isolation selon la revendication 36, **caractérisée en ce que** le guidage est disposé devant la buse sur le tube, en observant dans la direction de déplacement du tube.

38. Isolation selon la revendication 36 ou 37, **caractérisée en ce que** pour le guidage est utilisé un guidage à rouleaux ou un guidage glissant et/ou un guidage manoeuvrable en direction radiale par rapport au tube, et une position de la buse, en alignement avec le tube, est provoquée en procédant à une manoeuvre de réglage.

39. Isolation selon l'une des revendications 32 à 38, **caractérisée en ce que** la buse annulaire est alimentée en plusieurs endroits répartis sur la périphérie.

40. Isolation selon l'une des revendications 28 à 39, caracérisée en ce que le EP et/ou le dioxyde de silicium et/ou le dioxyde de titane est/sont répartis et/ou pressés sur la surface du tube, au moyen d'une buse d'étirage.

41. Isolation selon la revendication 40, **caractérisée en ce que** l'on utilise une buse d'étirage, réalisée d'une seule pièce, avec ou reliée à la buse annulaire.

42. Isolation selon l'une des revendications 1 à 41, **caractérisée en ce que**
a) le conduit d'acier et le EP et/ou le dioxyde de silicium sont munis de charges électriques différentes, faisant que le EP et/ou le dioxyde de silicium et/ou le dioxyde de titane restent en adhésion avec les efforts de charge, sur la surface de la conduite en acier et/ou
b) la couche de EP et le dioxyde de silicium et le dioxyde de titane sont munis de charges électriques différentes, de manière que le dioxyde de silicium et le dioxyde de titane adhère à la couche de EP, du fait des efforts de charge, ou inversement, et/ou
c) la couche de EP et le dioxyde de silicium et/ou le dioxyde de titane sont munis de charges électriques différentes, de manière que le dioxyde de silicium adhère à la couche d'adhésif, du fait des efforts de charges, ou inversement.

43. Isolation selon l'une des revendications 1 à 42, **caractérisée en ce que** la couche de EP et/ou la couche de dioxyde de silicium et/ou la couche de dioxyde de titane est/sont réalisée(s) sous la forme de couche mince.

44. Isolation selon l'une des revendications 1 à 43, **caractérisée en ce que** la surface de conduite en acier est amenée à une profondeur de rugosité par un sablage, **en ce que** du EP pulvérulent ou du dioxyde de silicium pulvérulent adhèrent sur la surface.

45. Isolation selon la revendication 44, **caractérisée par** une profondeur de rugosité de 0,005 à 0,5 mm.

46. Isolation selon l'une des revendications 1 à 45, **caractérisée en ce que** la surface de revêtement est chauffée et/ou la poudre chauffée est appliquée, et/ou **en ce que** la poudre est appliquée avec un agent support chauffé.

47. Isolation selon la revendication 46, **caractérisée en ce que**, lors de l'utilisation du EP, en poudre, présente une température de préchauffage inférieure à la température de réaction de EP.

48. Isolation selon l'une des revendications 1 a 47, **caractérisée en ce que** l'on utilise du dioxyde de silicium et/ou du dioxyde de titane séché(s).

49. Isolation selon la revendication 48, **caractérisée en ce que** le dioxyde de silicium et/ou le dioxyde de titane est/sont séché (s) à un degré tel que le retrait de la couche en dioxyde de silicium et en dioxyde de titane est compensé par son augmentation de volume, le séchage étant, de préférence, effectué par chauffage à au moins 117 degrés Celsius, directement avant et lors de l'application de la couche.

50. Isolation selon l'une des revendications 1 à 49, **caractérisée par** une application mécanique du produit de revêtement, en particulier par utilisation de gaz porteur, pour le soufflage du produit de revêtement ou par utilisation de roues éjectrices, pour le produit de revêtement pulvérulent.

51. Isolation selon l'une des revendications 1 à 50 **caractérisée en ce que** la couche d'adhésif est appliquée à une température propre d'au moins 150 degrés Celsius et/ou la couche de PE est appliquée avec au moins une température propre de 165 degrés Celsius.

52. Isolation selon l'une des revendications 1 à 51, **caractérisée par** une température de durcissement minimale de 130 degrés Celsius pour un temps de durcissement maximal de 15 minutes, de préférence par une température de durcissement minimale de 150 degrés Celsius pour un temps de durcissement maximal de 10 minutes, et de façon encore mieux préférée par une température de durcissement minimal de 180 degrés Celsius pour un temps de durcissement maximal de 5 minutes pour la ré-isolation.

53. Isolation selon l'une des revendications 1 à 52, **caractérisée par** l'utilisation de poudre de EP, d'une taille de grain inférieure à 0,3 mm, de préférence d'une taille de grain inférieure à 0,1 mm, et, de façon encore mieux préférée, d'une taille minimale de 0,05 mm.

54. Isolation selon l'une des revendications 1 à 53, **caractérisée par** l'utilisation de poudre de dioxyde de silicium d'une taille de grain inférieure à 0,02 mm, de préférence d'une taille de grain allant jusqu'à 0,01 mm et, de façon encore mieux préférée, d'une taille minimale de 0, 005 mm.

55. Isolation selon l'une des revendications 11 à 54, **caractérisée en ce que** l'on ajoute en mélange, au dioxyde de silicium et/ou au dioxyde de titane, un adhésif à chaud.

56. Isolation selon l'une des revendications 1 à 55, **caractérisée en ce que** l'on ajoute en mélange, au dioxyde de silicium et/ou au dioxyde de titane, un mélange de polyisobutylène.

57. Isolation selon la revendication 56, **caractérisée en ce que** l'on utilise un mélange de polyisobutylène, composé d'un polyisobutylène à faible poids moléculaire, qui s'évapore sous l'effet de la chaleur, et un polyisobutylène adhésif, de plus haut poids moléculaire, qui subsiste au moins partiellement sous l'effet de la chaleur.

58. Isolation selon l'une des revendications 1 à 57, **caractérisée en ce qu'**on ajoute en mélange une résine balsamique adhésive, ou du colophane adhésif.

59. Isolation selon l'une des revendications 1 à 58, **caractérisée en ce qu'**on utilise une proportion de polyisobutylène allant jusqu'à 50 % en poids, de préférence jusqu'à 30 % en poids, de façon encore mieux préférée jusqu'à 20 % en poids et, de façon la mieux préférée, jusqu'à 10 % en poids, en se référant à la couche de dioxyde de silicium et de dioxyde de titane.

60. Isolation selon la revendication 40, **caractérisée en ce qu'**on utilise une proportion de résine balsamique, par exemple de colophane jusqu'à 30 % en poids, de préférence jusqu'à 20 % en poids, en se référant à la quantité résiduelle subsistant après extraction de la quantité de dioxyde de silicium et de la quantité de dioxyde de titane.

61. Isolation selon l'une des revendications 1 à 60, **caractérisée en ce que** la couche est chauffée à 100 à 110 degrés Celsius après application.

62. Isolation selon l'une des revendications 1 à 61, **caractérisée en ce qu'**on effectue un chauffage inductif de la surface de conduit.
